# EUROPÄISCHE PATENTSCHRIFT

(11) **EP 1 201 158 B1**
(45) Veröffentlichungstag und Bekanntmachung des Hinweises auf die Patenterteilung: **28.12.2005**
(21) Anmeldenummer: 01124712.9
(22) Anmeldetag: 16.10.2001
(51) Int. Cl.: A47B 43/00, A47B 47/00, A47B 96/14

(54) **Aufbewahrungsmöbel, insbesondere für Büroeinrichtungen**
Storage furniture, particularly for office use
Meuble de rangement, notament pour offices

(30) Priorität: 01.06.2001 DE 20109184 U; 17.10.2000 DE 10051428
(43) Veröffentlichungstag der Anmeldung: 02.05.2002
(73) Patentinhaber: Waibel, Walter, 84130 Dingolfing (DE)
(72) Erfinder: Waibel, Walter, 84130 Dingolfing (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 823 229
- DE-A- 4 327 379
- DE-U- 9 214 830
- DE-U- 20 109 184
- FR-A- 2 479 671
- US-A- 4 106 738
- US-A- 5 468 061
- US-A- 5 664 854
- US-A- 5 943 968

## Beschreibung

Die Erfindung betrifft ein Aufbewahrungsmöbel, insbesondere für Büroeinrichtungen, nach dem Oberbegriff des Anspruches 1.

Es ist bekannt, Möbel, und hier insbesondere Aufbewahrungsmöbel beispielsweise für Büroeinrichtungen, also Schränke, Regale etc. modular auszugestalten. Bei derartigen modularen Möbeln oder Möbelsystemen läßt sich aus einer beschränkten Anzahl von Teilen eine Vielzahl von hinsichtlich Größe, Ausgestaltung etc. unterschiedlicher Möbelstücke eines Systems quasi baukastenartig zusammensetzen, wobei den unterschiedlichen Anforderungen seitens des Benutzers und/oder den räumlichen Gegebenheiten möglichst optimal Rechnung getragen werden kann.

Bekannt sind weiterhin sogenannte "Mitnahmemöbel", welche im zerlegten und verpackten Zustand ebenfalls im Rahmen eines modulartig aufgebauten Systems erworben, zusammengebaut und aufgestellt werden können, wobei ebenfalls eine Anpassungsmöglichkeit an Vorgaben seitens des Benutzers und/oder der Räumlichkeiten gegeben ist. Ein solches Möbel ist aus der Druckschrift US-A-5664854 bekannt, das den Oberbegriff des unabhängigen Anspruchs offenbart.

Die vorliegende Erfindung hat es sich zur Aufgabe gemacht, derartige bekannte Aufbewahrungsmöbel bzw. Möbelsysteme so auszugestalten, daß bei gegenüber bekannten Aufbewahrungsmöbeln bzw. Möbelsystemen zumindest gleichbleibender Teilezahl eine noch größere Flexibilität möglich ist.

Zur Lösung dieser Aufgabe schlägt die vorliegende Erfindung die im Anspruch 1 angegebenen Merkmale vor, was das erfindungsgemäße Aufbewahrungsmöbel betrifft.

Die Unteransprüche haben vorteilhafte Weiterbildungen und Ausgestaltungsformen zum Inhalt.

Gemäß der vorliegenden Erfindung wird ein Möbelsystem zum Errichten eines Aufbewahrungsmöbels, insbesondere für Büroeinrichtungen, mit wenigstens zwei Seitenwänden, bevorzugt einer Rückwand, einer Boden- und einer Deckplatte, unter Verwendung wenigstens eines Beschlags geschaffen, welches gekennzeichnet ist durch Profilschienen zumindest an den Stoßkanten zwischen der Rückwand und den Seitenwänden, wobei an den Profilschienen der wenigstens eine Beschlag befestigbar ist.

Durch den Gegenstand der vorliegenden Erfindung ist somit eine Abkehr von den bisher üblichen starren 90°-Systemen bekannter Aufbewahrungsmöbel gegeben. Hieraus ergibt sich in der Praxis eine Mehrzahl von Vorteilen, welche insbesondere darin zu sehen sind, daß eine noch bessere Anpassung an räumliche Gegebenheiten möglich ist, sowie die Möglichkeit gegeben ist, das Aufbewahrungsmöbel in einem zusammengeklappten Zustand transportieren zu können, bei welchem beispielsweise die beiden Seitenwände oder Seitenwangen parallel zur Rückwand verlaufend eingeklappt sind, so daß ein platzsparendes Transportieren und ggf. Lagern oder Zwischenlagern möglich ist. Am Aufstellungsort werden die beiden Seitenwände nach außen geklappt, bis sie einen gewünschten Winkel, beispielsweise 90°, zu der Rückwand einnehmen. Das so aus Rückwand und den beiden ausgeklappten Seitenwänden bestehende Aufbewahrungsmöbel-Fragment ist bereits eigenstabil und frei stehend, so daß die weiteren Aufbauarbeiten wesentlich erleichtert sind.

Weitere erfindungswesentliche Vorteile, welche sich mit dem Aufbewahrungsmöbel gemäß der vorliegenden Erfindung erzielen lassen, ergeben sich noch aus der nachfolgenden detaillierten Beschreibung.

Eine vorteilhafte Ausgestaltungsform der vorliegenden Erfindung besteht darin, daß der Schwenkweg zwischen einer Seitenwand und der angrenzenden Rückwand zwischen wenigstens 90° und 180° liegt, (d.h. der Schwenkweg oder - bereich erstreckt sich von 0° bis 90° oder 0° bis 180°), wobei weiterhin der Schwenkbereich bevorzugt entweder exakt 90° oder exakt 180° beträgt. Bereits mit einem Schwenkweg von 90° läßt sich eine Vielzahl von Vorteilen erreichen; insbesondere jedoch mit einem Schwenkweg von 180° lassen sich die mit der vorliegenden Erfindung erzielbaren Vorteile weitestgehend vollständig ausschöpfen, da hierbei insbesondere eine parallel verlaufende Stellung zwischen der Rückwand und der hierzu relativ eingeklappten Seitenwand realisierbar ist, aber auch Zwischenwinkellagen von beispielsweise 30°, 45°, 60° etc. zwischen der betreffenden Seitenwand und der Rückwand, oder hiervon abweichende, beliebige Winkellagen zwischen 0° und 180°.

Die Schwenk-Endlagen zwischen Seitenwand und Rückwand sind bevorzugt durch Anschläge festgelegt, so daß die definierten Endlagen des Schwenkweges gegeben sind.

Gemäß einer bevorzugten Weitergestaltung des Möbelsystems ist der Beschlag aus zwei zueinander identischen Beschlaghälften aufgebaut, welche schwenkbeweglich miteinander verbunden sind. Hierdurch kann der erfindungsgemäße Beschlag mit einem Minimum an Teilen realisiert werden.

Eine vorteilhafte Weitergestaltung des Möbelsystems besteht darin, daß der Beschlag an der Profilschiene festschraubbar ist. Dies stellt eine rasche und zuverlässige Montage- oder Befestigungsmöglichkeit des Beschlags an der Profilschiene bereit.

Bevorzugt ist hierbei der Beschlag in einem bestimmten Rastermaß an der Profilschiene festschraubbar, so daß exakte Maßhaltigkeit gewährleistet ist.

Das Rastermaß läßt sich gemäß einer bevorzugten weiteren Ausgestaltungsform durch eine sich im wesentlichen über die gesamte Länge der Profilschiene erstreckende Lochung vorgeben. Besonders bevorzugt ist hierbei die Lochung in einem streifenförmigen Lochblech ausgebildet, welches in eine entsprechende Aufnahmenut seitens der Profilschiene eingeschoben ist. Durch diese Vorgehensweise kann die Profilschiene in einem Arbeitsgang, beispielsweise durch einen Strangpreßvorgang aus z.B. Aluminium gefertigt werden, ohne daß irgendwelche Nachbearbeitungen seitens der Profilschiene zur Erzielung der Lochung notwendig sind. Die Lochung selbst wird durch einen separaten Arbeitsvorgang mit hoher Maßhaltigkeit auf einer Stanze oder dergleichen in dem Lochblech ausgebildet, wonach dann dieses Lochblech in die Aufnahmenut der Profilschiene eingeschoben wird und somit an der Profilschiene die Lochung vorgibt.

Bevorzugt deckt das Lochblech eine im Querschnitt der Profilschiene im wesentlichen senkrecht zur Aufnahmenut stehende Einschraubnut in der Profilschiene ab, wobei die Einschraubnut zumindest über einen Teil ihrer Tiefe Gegenhaltemittel für einen Eingriff mit einem Gewinde einer Schraube aufweist, mit welcher der Beschlag an der Profilschiene anschraubbar ist, wobei weiterhin die einzelnen Löcher der Lochblech-Lochung von dem Gewinde ohne Schraubeingriff hiermit durchsetzt werden. Die einzelnen Löcher der Lochblech-Lochung geben somit die Einschraubpositionen für die Schraube oder die Schrauben vor, mit welcher oder welchen der Beschlag an der Profilschiene anschraubbar ist. Die hinter dem Lochblech liegende Einschraubnut steht dann für den eigentlichen Gewindeeingriff für die Schraube oder die Schrauben zur Verfügung, wobei die Gegenhaltemittel - wie sich aus der nachfolgenden Beschreibung noch ergeben wird - so ausgebildet sind, daß über die gesamte Länge der Profilschiene hinweg gesehen an jeder beliebigen Stelle ein derartiger Schraubeingriff erfolgen kann. Bohr- und/oder Ausrichtarbeiten im Zuge der Montage sind somit entbehrlich.

Die Löcher der Lochblech-Lochung sind bevorzugt viereckig, insbesondere quadratisch. Neben gestalterisch/ästhetischen Vorteilen, die sich aus einer insbesondere quadratischen Formgebung der einzelnen Löcher ergeben, wird hierdurch erreicht, daß das eingrifffreie Einsetzen der Schrauben in die Lochblech-Lochung erleichtert wird.

Das Rastermaß bzw. der Mittelpunktsabstand der einzelnen Löcher der Lochblech-Lochung beträgt in einer besonders bevorzugten Ausgestaltungsform exakt 18,9469 mm. Die sich hieraus ergebenden Vorteile werden ebenfalls in der nachfolgenden detaillierten Beschreibung näher erläutert.

Die Profilschiene hat bevorzugt im Querschnitt im wesentlichen die Form eines gleichschenkeligen Trapezes, wobei weiterhin im Querschnitt gesehen: im Bereich der beiden Trapezschenkel jeweils eine der Aufnahmenuten für das Lochblech im wesentlichen parallel zu dem jeweiligen Trapezschenkel verlaufend ausgebildet ist ; im Bereich der beiden Trapezschenkel jeweils eine der Einschraubnuten senkrecht zum jeweiligen Trapezschenkel verlaufend ausgebildet ist; die längere der beiden parallel zueinander verlaufenden Trapez-Gegenseiten im wesentlichen geschlossen ist; und in der kürzeren der beiden parallel zueinander verlaufenden Trapez-Gegenseiten eine senkrecht zu dieser Gegenseite verlaufende Einstecknut ausgebildet ist. Diese Ausgestaltungsform der Profilschiene erlaubt ein Höchstmaß an Flexibilität; so stehen zwei im Winkel von 90° zueinander stehende Flächen, nämlich die beiden Trapezschenkel zur Aufnahme der Lochbleche zur Verfügung, welche somit ebenfalls im Winkel von 90° zueinander ausgerichtet stehen. Dazwischen, das heißt, in einem Winkel von 45°, steht die Einstecknut zur Verfügung, in welche gemäß einer weiteren bevorzugten Ausgestaltungsform ein plattenförmiges Bauelement, insbesondere die Rück- und/oder Seitenwand des Möbels, einsteckbar ist.

Weiterhin hat die Profilschiene bevorzugt wenigstens eine im Querschnitt umfangsseitig geschlossene Einstecköffnung, welche mit wenigstens einem entsprechenden Einsteckvorsprung seitens eines Eckverbinders in Eingriff bringbar ist. In den Eckbereichen des Möbels, das heißt, dort, wo vertikal verlaufende Profilschienen mit horizontal verlaufenden Profilschienen zusammenstoßen, läßt sich hierdurch eine saubere und belastungsfähige Verbindung erzielen.

Zur Erhöhung der Festigkeit im Bereich der Eckverbindung ist weiterhin bevorzugt eine Mehrzahl von Einstecköffnungen vorgesehen, welche symmetrisch zur Mittelsenkrechten des Trapezquerschnitts der Profilschiene in diesem Querschnitt verteilt sind, wobei eine entsprechende Anzahl von Einsteckvorsprüngen seitens des Eckverbinders vorgesehen ist, welche entsprechend der Verteilung der Einstecköffnungen auf der Grundplatte verteilt sind. Hierdurch ist insbesondere eine verdrehungssichere Verbindung im Eckbereich gewährleistet.

Bevorzugt dienen die getrennten Beschlaghälften an der Profilschiene bei Verwendung des erfindungsgemäßen Beschlags im erfindungsgemäßen Möbelsystem jeweils als Befestigungsmittel für in Tiefenrichtung des Möbels verlaufende Traversen und/oder Fachbodenträger. Zur Festlegung der Traversen und/oder Fachbodenträger ist somit kein eigenes Beschlagteil notwendig, sondern es wird eine der Beschlaghälften verwendet; die notwendige Anzahl von Einzelteilen wird hierdurch verringert.

Die Traversen und/oder Fachbodenträger sind bevorzugt endseitig auf je eine Beschlaghälfte aufsteckbar. Dies stellt eine ebenso rasche und unkomplizierte wie sichere und haltbare Verbindung dar, insbesondere dann, wenn diese Steckverbindung zwischen Traverse und/oder Fachbodenträger gemäß einer weiteren bevorzugten Ausgestaltungsform mit der betreffenden Beschlaghälfte durch eine die Beschlaghälfte durchsetzende Verschraubung sicherbar ist.

Die Traversen und/oder Fachbodenträger sind bevorzugt im Querschnitt L-förmig ausgebildet, wobei der horizontale Schenkel des "L" zur Halterung eines Deckel- oder Bodenteils oder eines Fachbodens dient und der vertikale Schenkel des "L" kastenförmig/hohl ausgebildet ist und auf ein freies Ende der Beschlaghälfte aufsteckbar ist. Die Verbindung zwischen Beschlag und damit Profilschiene und Deckel- oder Bodenteil oder Fachboden ist somit einstückig und damit optimal stabil ausgebildet.

Ist der kastenförmige/hohle vertikale Schenkel des "L" durch einen horizontalen Steg in zwei gleich große Einsteckkammern unterteilt, wobei jede Einsteckkammer formschlüssig auf das freie Ende der Beschlaghälfte steckbar ist, ist gemäß einer bevorzugten Ausgestaltungsform die Traverse und/oder der Fachbodenträger derart wendbar, daß der horizontale Schenkel des "L" wahlweise am oberen oder unteren Ende des vertikalen Schenkels zu liegen kommt. Hierdurch kann den unterschiedlichsten Einbauanforderungen und Einbausituationen Rechnung getragen werden. Bevorzugt ist auch bei gewendeter Traverse und/oder gewendetem Fachbodenträger der lichte Abstand zwischen hiervon getragenen Deckel- oder Bodenteilen oder Fachböden unverändert. Eine gleichbleibende Rasterung oder Unterteilung im Inneren des Möbelsystems oder Aufbewahrungsmöbels ist hierdurch gewährleistet, was insbesondere beim Einbau von zusätzlichen Ausstattungsgegenständen, beispielsweise Auszügen, Hängeregistraturen etc. von erheblichem Vorteil ist.

Hierzu können an den Profilschienen neben den Beschlägen zur Profilschienen- und/oder Traversen- und/oder Fachbodenträgerbefestigung weitere Beschläge, insbesondere Türbeschläge, Beschläge für Auszüge etc. befestigbar sein.

Weitere Einzelheiten, Aspekte und Vorteile der vorliegenden Erfindung ergeben sich aus der nachfolgenden Beschreibung anhand der Zeichnung.

Es zeigt:
Fig. 1 in Draufsicht einen Querschnitt durch eine Profilschiene des erfindungsgemäßen Möbelsystems;
Fig. 2 eine Fig. 1 entsprechende Darstellung der Pro filschiene mit aufgestecktem Eckverbinder;
Fig. 3 eine Draufsicht auf eine Beschlaghälfte des erfindungsgemäßen Beschlags;
Fig. 4 eine Fig. 3 entsprechende Darstellung der anderen Seite der Beschlaghälfte;
Fig. 5 eine perspektivische Ansicht der Beschlaghälfte;
Fig. 6 eine perspektivische Ansicht der Beschlaghälfte aus einer anderen Blickrichtung;
Fig. 7 zwei miteinander zu einem Beschlag verbundene Beschlaghälften in der einen Endlage;
Fig. 8 eine Fig. 7 entsprechende Darstellung der beiden Beschlaghälften in der anderen Endlage;
Fig. 9 eine geschnittene und teilweise vereinfachte Draufsicht von oben auf eine rechte hintere Ecke eines erfindungsgemäßen Aufbewahrungsmöbels mit zwei im rechten Winkel zueinander angeordneten Profilschienen, dem dazwischen liegenden Beschlag, in die Profilschienen eingesteckte Rück- und Seitenwände und einer auf einer Beschlaghälfte aufgesteckten Traverse;
Fig. 10 eine geschnittene Draufsicht von oben auf eine Profilschiene im Bereich der Aufbewahrungsmöbel-Vorderkante mit eingesteckter Seitenwand und angebrachtem Türbeschlag;
Fig. 11 eine stark vergrößerte Querschnittsdarstellung durch einen Fachbodenträger oder eine Traverse;
Fig. 12 eine perspektivische Ansicht eines Eckverbinders;
Fig. 13 eine Seitenansicht auf den Eckverbinder von Fig. 12;
Fig. 14 und 15 Aufbaubeispiele eines mit dem erfindungsgemäßen Möbelsystem realisierbaren Aufbewahrungsmöbels mit erläuternden Höhenangaben;
Fig. 16 eine vergrößerte Einzelheit aus dem Kreis B in Fig. 14;
Fig. 17 eine vergrößerte Einzelheit aus dem Kreis A in Fig. 14;
Fig. 18 eine Fig. 9 entsprechende, gegenüber dieser jedoch verkleinerte Darstellung der rechten hinteren Ecke eines Aufbewahrungsmöbels zur Veranschaulichung, wie ein Fachboden eingelegt ist;
Fig. 19 eine Fig. 18 entsprechende Darstellung zur Veranschaulichung des durch die besondere Formgebung der Profilschienen gewonnenen Frei- oder Hinterschneidungsraumes zum Einbau von zusätzlichen Beschlägen oder Zusatzelementen;
Fig. 20 eine perspektivische Darstellung zur Veranschaulichung der Einbaumöglichkeit eines Teleskopauszugs in dem Frei- oder Hinterschneidungsraum;
Fig. 21 eine Fig. 20 entsprechende Darstellung zur Veranschaulichung der Einbaumöglichkeit einer Führungschiene für ein Ausklappbord in dem Frei- oder Hinterschneidungsraum; und
Fig. 22 eine Fig. 20 oder 21 entsprechende Darstellung zur Veranschaulichung der Einbaumöglichkeit einer Teleskopstange für ein Ausklappbord in dem Frei- oder Hinterschneidungsraum.

Zunächst sei angemerkt, daß die Maßstäbe der einzelnen Figuren zueinander nicht einheitlich sind.

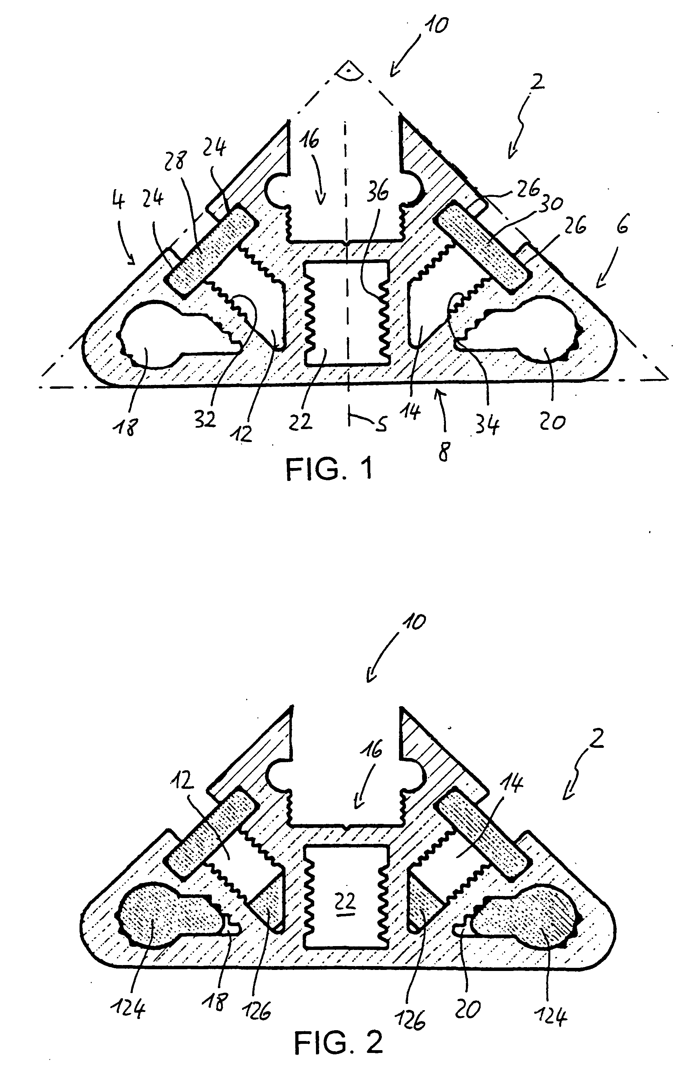

Fig. 1 zeigt in Draufsicht einen Schnitt durch eine Profilschiene 2, wie sie im erfindungsgemäßen Möbelsystem zur Anwendung gelangt und an der einer oder mehrere erfindungsgemäße Beschläge befestigbar sind, um ein erfindungsgemäßes Aufbewahrungsmöbel zu realisieren. Die Profilschiene 2 hat im Querschnitt die aus Fig. 1 ersichtliche trapezförmige Gestalt und ist bezüglich einer Linie S symmetrisch aufgebaut. Die Profilschiene bzw. der Trapezquerschnitt der Profilschiene umfaßt zwei Trapezschenkel 4 und 6 sowie zwei zueinander parallel verlaufende Trapez-gegenseiten, nämlich eine längere Trapez-Gegenseite 8 und eine kürzere Trapez-Gegenseite 10. Wie in Fig. 1 weiterhin durch die strichpunktierten Linien veranschaulicht, mit welchen die beiden Trapezschenkel 4 und 6 und die längere Trapezseite 8 verlängert sind, kann der Querschnitt der Profilschiene 2 auch von einem rechtwinkeligen Dreieck umschrieben dargestellt werden, wobei die beiden Trapezschenkel 4 und 6 die Katheten wären und die längere Trapezseite 8 die Hypotenuse wäre. Aus Gründen einer besseren Verständlichkeit der nachfolgenden Erläuterung sei jedoch nachfolgend für den Querschnitt der Profilschiene 2 das Trapezmodell angenommen.

Wie unmittelbar aus Fig. 1 hervorgeht, ist der Querschnitt der Profilschiene 2 nicht massiv, sondern in der Profilschiene 2 befindet sich in der Längsrichtung verlaufend eine Mehrzahl von umfangsseitig geschlossenen Hohlräumen bzw. teilweise offenen Ausnehmungen. Es sind dies von den beiden Trapezschenkeln 4 und 6 aus im wesentlichen senkrecht zu deren Oberfläche aus nach innen verlaufende Ausnehmungen oder Nuten 12 bzw. 14, eine von der kurzen Trapez-Gegenseite 10 aus im wesentlichen senkrecht zu deren Ebene aus nach innen verlaufende Nut 16, sowie zwei umfangsseitig geschlossene Öffnungen 18 und 20 und eine von der Symmetrielinie in zwei Hälften unterteilte, umfangsseitig geschlossene Öffnung 22.

Die Nuten 12 und 14 dienen, wie aus nachfolgender Beschreibung noch näher hervorgehen wird, als Einschraubnuten, die Nut 16 dient als Einstecknut, die Öffnungen 18 und 20 dienen als Einstecköffnung und die Öffnung 22 dient zur axialen Aufnahme eines Gewindestiftes, an welchem ein Standfuß angeordnet ist, um die Profilschiene 2 aufstellen zu können, wobei über den Gewindestift eine Höhenverstellung des Standfußes gegenüber der Profilschiene möglich ist, um später das Möbelstück ausrichten zu können.

Im wesentlichen parallel zu den beiden Trapezschenkeln 4 und 6 verlaufend ist im Abstand hinter der Mündung der Einschraubnuten 12 und 14 im Bereich der jeweiligen Trapezschenkel 4 und 6 jeweils eine Aufnahmenut 24 bzw. 26 ausgebildet. Die Aufnahmenut 24 dient hierbei zur Aufnahme eines Lochblechs 28 und die Aufnahmenut 30 dient zur Aufnahme eines weiteren Lochblechs 30. Ausgestaltung und Funktion der Lochbleche 28 und 30 werden nachfolgend noch näher erläutert.

Im Inneren der Einschraubnut 12 befindet sich eine in Längsrichtung der Profilschiene 2 verlaufende Riffelung 32, genauso wie sich im Inneren der Einschraubnut 14 eine in Längsrichtung der Profilschiene 2 verlaufende Riffelung 34 befindet. Im Inneren der Öffnung 22 befindet sich ebenfalls eine Riffelung 36, welche sich in Längsrichtung der Profilschiene 2 erstreckt. Die Riffelungen 32 bis 36 dienen als Gegenhaltemittel, wenn in die Einschraubnuten 12 bzw. 14 und/oder die Öffnung 22 eine Schraube und/oder ein Gewindestift eingeschraubt wird.

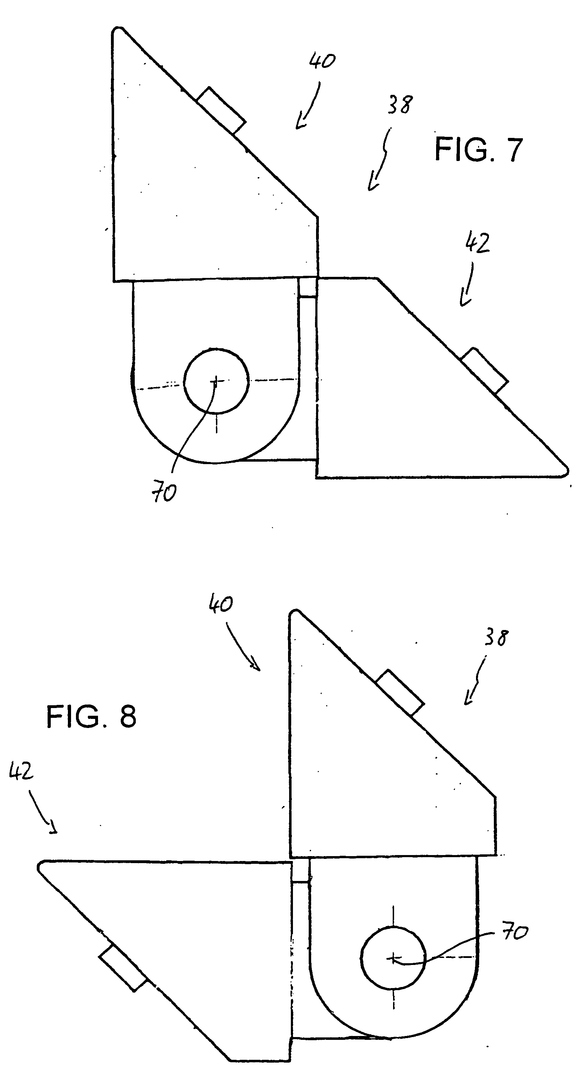

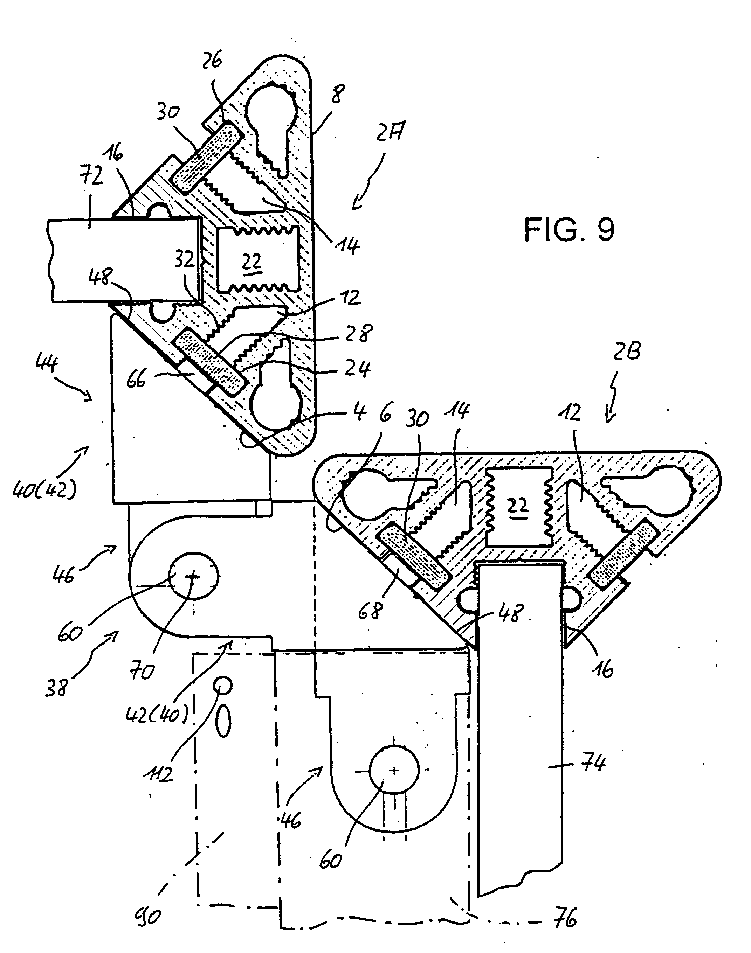

Die Profilschiene 2 mit dem aus Fig. 1 ersichtlichen und oben beschriebenen Aufbau dient zur Aufnahme bzw. Befestigung unterschiedlicher Beschläge. Insbesondere lassen sich zwei Profilschienen gemäß Fig. 1 über einen erfindungsgemäßen Beschlag gemäß den Figuren 7 und 8 miteinander verbinden, wie am besten aus Fig. 9 hervorgeht.

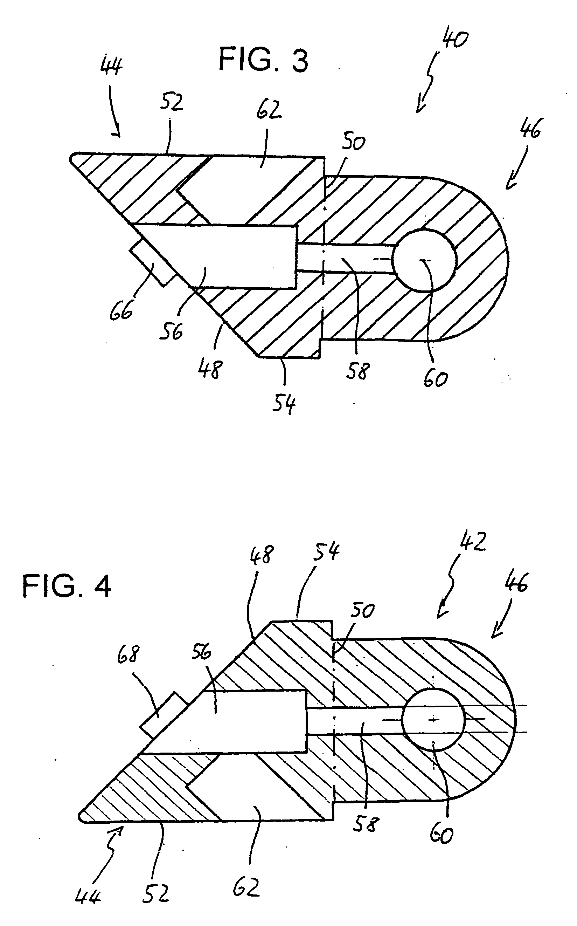

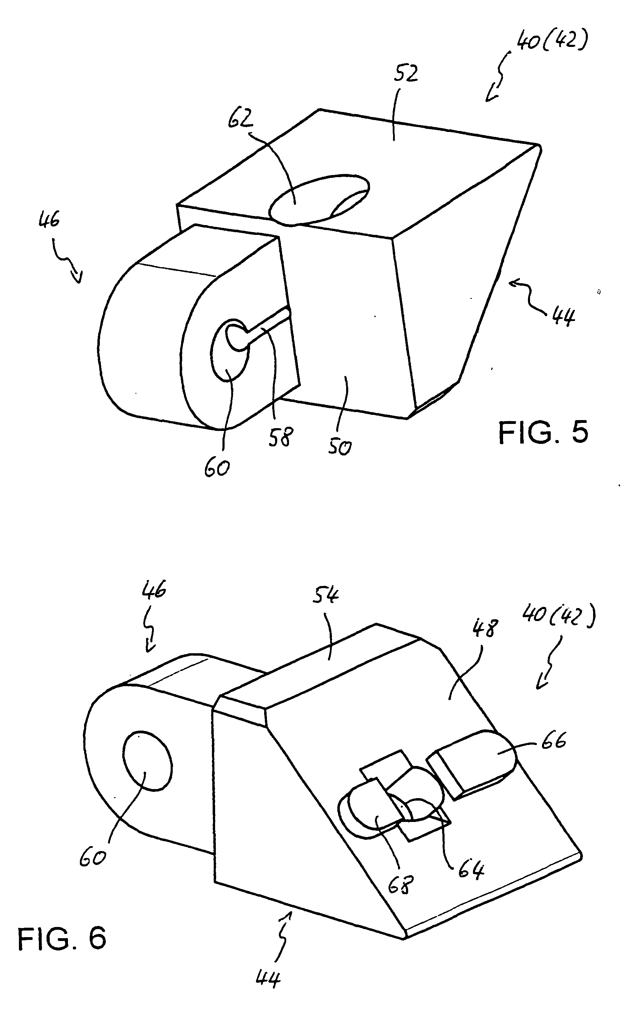

Die Figuren 7 und 8 zeigen jeweils einen erfindungsgemäßen Beschlag 38, welcher aus zwei Beschlaghälften 40 und 42 besteht, welche zueinander identisch sind. Die Figuren 3 und 4 zeigen jeweils eine Ansicht einer Beschlaghälfte, wobei aus Gründen der Identität der Beschlaghälften 40 und 42 in den Figuren 3 und 4 nachfolgend nur die Beschlaghälfte 40 betrachtet sei. Die Beschlaghälfte 40 kann - wie auch aus den Figuren 5 und 6 hervorgeht - im wesentlichen aus zwei Teilabschnitten (bevorzugt einstückig) zusammengesetzt betrachtet werden, nämlich aus einem Befestigungsabschnitt 44 und einem Verbindungsabschnitt 46. Der Befestigungsabschnitt 44 hat im Querschnitt die Form eines ungleichförmigen Trapezes mit zwei Trapezschenkeln 48 und 50 und zwei zueinander parallelen Trapez-Gegenseiten 52 und 54. Ausgehend von dem Trapezschenkel 48 bzw. von der dortigen Fläche des Befestigungsabschnittes 44 erstreckt sich eine Kammer 56 in den Bestigungsabschnitt 44 hinein. Die Kammer 56 mündet in einen Kanal 58, der seinerseits in einer Bohrung 60 mündet, welche in dem Verbindungsabschnitt 46 ausgebildet ist. Wie am besten aus Fig. 5 hervorgeht, mündet hierbei der Kanal 58 nicht mittig in der Längserstreckung der Bohrung 60, sondern, da er mittig in dem Befestigungsabschnitt 44 ausgebildet ist, und der Verbindungsabschnitt 46 gemäß Fig. 5 gegenüber dem Befestigungsabschnitt 44 zur Seite versetzt ist (um die beiden Beschlaghäften in Fluchtung miteinander zusammensetzen zu können), an einem Randbereich der Bohrung 60. Der Verlauf des Kanals 58 und der Kammer 56 ist im wesentlichen senkrecht zu dem Schenkel 50.

Im wesentlichen senkrecht zum gegenüberliegenden Schenkel 48 bzw. der dortigen Fläche oder Ebene des Befestigungsabschnittes 44 verläuft eine weitere Kammer 62, welche in einen Kanal übergeht, der in dem Schenkel 48 bzw. der dortigen Ebene des Befestigungsabschnittes 44 mündet und in Fig. 6 mit dem Bezugszeichen 64 versehen ist. Die Anordnung aus Kammer 62 und Kanal 64 entspricht somit im wesentlichen der Anordnung aus Kammer 56 und Kanal 58.

Wie weiterhin am besten aus Fig. 6 hervorgeht, ist beidseits der Mündung des Kanals 64 in der Ebene oder Fläche des Befestigungsabschnittes 44 ein Vorsprung 66 bzw. 68 ausgebildet.

Die beiden Beschlaghälften 40 und 42 lassen sich in der aus Fig. 7 bzw. 8 ersichtlichen Weise zu dem erfindungsgemäßen Beschlag 38 zusammenfügen. Hierzu werden die Beschlaghälften 40 und 42 jeweils mit ihren Verbindungsabschnitten 46 so aufeinander gelegt, daß die Bohrungen 60 zur Fluchtung gelangen. Diese in Fluchtung liegenden Bohrungen 60 werden dann von einem entsprechenden Verbindungselement durchsetzt, welches hierin unverlierbar gehalten ist, so daß die Beschlaghälften 40 und 42 um eine durch die Bohrungen 60 definierte Drehachse 70 Schwenkbewegungen relativ zueinander ausführen können. In den Figuren 7 und 8 sei die Beschlaghälfte 40 als festliegend betrachtet; Fig. 7 zeigt dann die eine Endlage oder 0°-Endlage der anderen Beschlaghälfte 42 gegenüber der Beschlaghälfte 40, und Fig. 8 zeigt die andere Endlage oder 180°-Endlage der Beschlaghälfte 42 bezüglich der Beschlaghälfte 40. Mit anderen Worten, im dargestellten Ausführungsbeispiel beträgt der Schwenkweg oder Schwenkwinkel der beiden Beschlaghälften 40 und 42 relativ zueinander maximal 180°. Durch andere Ausgestaltungen der Beschlaghälften 40 und 42 kann der Schwenkweg jedoch auch auf andere Winkelbeträge eingeschränkt oder ggf. erweitert werden, beispielsweise auf 90° oder 270°. In jedem Fall sind bevorzugt die jeweiligen Endlagen der Beschlaghälften 40 und 42 zueinander durch gegenseitige Anschläge festgelegt oder definiert, um die gewünschten Endlagen genau einhalten zu können.

Fig. 9 zeigt in Draufsicht die rechte hintere Ecke eines mit dem erfindungsgemäßen Möbelsystem unter Verwendung des erfindungsgemäßen Beschlags aufgebauten Aufbewahrungsmöbels. Dargestellt sind zwei Profilschienen, 2A und 2B, welche jeweils den Aufbau gemäß Fig. 1 haben. Die Profilschienen 2A und 2B stehen im rechten Winkel zueinander, wobei die Profilschiene 2A zur Festlegung einer Rückwand 72 und die Profilschiene 2B zur Festlegung der rechten Seitenwand 74 des Möbels dienen möge. Wie unmittelbar aus Fig. 9 hervorgeht, ist hierbei die Rückwand 72 in die Einstecknut 16 der Profilschiene 2A eingesteckt und die Seitenwand 74 in die Einstecknut 16 der Profilschiene 2B. Der durch die beiden Beschlaghälften 40 und 42 gebildete Beschlag 38 dient zur Lagefixierung der beiden Profilschienen 2A und 2B zueinander, sowie zu deren Befestigung untereinander. Hierzu ist die Beschlaghälfte 40 mit ihrem Befestigungsabschnitt 44 an dem Trapezschenkel 4 der Profilschiene 2A befestigt und die Beschlaghälfte 42 ist mit ihrem Befestigungsabschnitt 4 an dem Trapezschenkel 6 der Profilschiene 2B befestigt. Da die Verbindung des Befestigungsabschnittes 44 seitens der Beschlaghälfte 42 an der Profilschiene 2B identisch zu der Befestigung des Befestigungsabschnittes 44 der Beschlaghälfte 40 an der Profilschiene 2A ist, sei nachfolgend nur die letztere Befestigung betrachtet

Die Rückwand 72 muß nicht - wie dargestellt - eine massive Rückwand im Sinne einer massiv durchgehenden, geschlossenen Wand sein, sondern kann z.B. auch aus horizontal verlaufenden einzelnen Streben, Lamellen oder Streifen aus z.B. Holz, Kunststoff, Metall, Stoff oder entsprechenden Materialmixes bestehen, welche gegebenenfalls noch vertikal voneinander beabstandet sind und somit zwischen sich Spalte freilassen; es kann sich um einen gewebebespannten Rahmen, einen mit einem Netz bespannten Rahmen, einen Rahmen mit vertikal, horizontal oder diagonal aufgespannten Schnüren oder Leinen etc. handeln. Unter diesem Gesichtspunkt ist auch der Ausdruck "bevorzugt einer Rückwand" in den Ansprüchen zu lesen.

Wie bereits eingangs unter Bezug auf Fig. 1 erläutert, sind in die Aufnahmenuten 24 bzw. 26 jeweils ein Lochblech und eine Lochschiene 28 bzw. 30 eingeschoben. Die Aufnahme der Lochbleche 28 bzw. 30 erfolgt in den Aufnahmenuten 24 bzw. 26.

Die Lochbleche 28 und 30 weisen entlang ihrer Längserstreckung eine Vielzahl von Löchern oder Durchbrüchen auf, welche bevorzugt in einem festgelegten Abstand oder Rastermaß zueinander ausgebildet sind. Besonders bevorzugt haben die einzelnen Löcher der Lochblech-Lochung bei der vorliegenden Ausführungsform einen Mittelpunktsabstand oder ein Rastermaß von 18,9469 mm; die sich im Rahmen der vorliegenden Erfindung hieraus ergebenden Vorteile werden nachfolgend noch näher erläutert werden.

Nachdem die Lochbleche 28 und 30 (nachfolgend sei nur noch das Lochblech 28 betrachtet) in die Aufnahmenut 24 (bzw. 26) eingeschoben worden sind, deckt das Lochblech 28 die Einschraubnut 12 nach außen hin im wesentlichen ab (genauso verhält es sich mit Lochblech 30 und Einschraubnut 14). Von der Kammer 62 her läßt sich eine Gewindeschraube mit ihrem Gewindeende in den Kanal 64 in den Befestigungsabschnitt 44 einführen. Der Kopf der Schraube wird hierbei von der Kammer 62 aufgenommen. Sobald diese Befestigungsschraube mit ihrem freien Ende von dem Schenkel 48 bzw. der dortigen Fläche des Befestigungsabschnittes 44 vorsteht, wird der Befestigungsabschnitt 44 an den Trapezschenkel 4 angesetzt, so daß der Schenkel 48 der Trapezform des Befestigungsabschnittes 44 an dem Trapezschenkel 4 der Trapezform der Profilschiene 2A anliegt. Die Vorsprünge 66 und 68 beidseits der Mündung des Kanals 64 kommen hierbei in dem Teilabschnitt der Einschraubnut 12 zu liegen, welcher vor dem Lochblech 28 liegt. Hierdurch ist der Befestigungsabschnitt 44 gegenüber der Profilschiene 2A bereits verdrehsicher in einer bestimmten Position quer zur Längserstreckung der Profilschiene 2A festgelegt. Die in die Kammer 62 bzw. den sich hieran anschließenden Kanal 64 eingeführte Schraube wird nachfolgend durch eine der Durchbrechungen oder eines der Löcher in dem Lochblech 28 geführt, wobei bevorzugt kein Schraubeingriff zwischen dem Lochblech 28 und der Schraube erfolgt, das heißt, die Löcher oder Durchbrechungen im Lochblech 28 haben gegenüber dem Gewindeabschnitt der Schraube Übermaß, und nachfolgend wird die Schraube mit ihrem Außengewinde in die als Innengewinde dienende oder wirkende Riffelung 32 im Inneren der Einschraubnut 12 eingeschraubt, so daß die beiden Schenkel oder Flächen 48 und 4 seitens des Befestigungsabschnittes 44 und der Profilschiene 2A aneinander gedrückt werden und der Befestigungsabschnitt 44 durch diese Flächenanlage und durch die Schraube, welche die Bohrung oder das Loch im Lochblech 28 durchsetzt hat, auch in Höhenrichtung, d.h., entlang der Längsrichtung der Profilschiene 2A festgelegt ist.

Analog hierzu wird mit dem Befestigungsabschnitt 44 seitens der Beschlaghälfte 42 verfahren, welcher an der Profilschiene 2B festgelegt wird.

Die beiden Profilschienen 2A und 2B sind hierdurch über den Beschlag 38 und um die Achse 70 drehbar miteinander verbunden, so daß beispielsweise bei festgelegter Profilschiene 2A die Profilschiene 2B analog zur Darstellung der Figuren 7 und 8 eine Schwenkung um maximal 180° durchführen kann, wobei bei der maximalen Verschwenkung um 180° die Profilschiene 2B (bei entfernter Seitenwand 74) mit ihrer die Einstecknut 16 aufweisenden kurzen Trapez-Gegenseite 10 im wesentlichen parallel zur Rückwand 72 verlaufend ausgerichtet ist.

Man erkennt aus der Darstellung der Figur 9, daß die Winkel des Schenkels 48 bezüglich der langen Gegenseite 52 und des Trapezschenkels 4 bezüglich der langen Trapez-Gegenseite 8 so aufeinander abgestimmt sind, daß sich der Verbindungsabschnitt 46 der Beschlaghälfte 40 im wesentlichen im rechten Winkel zu der in Fig. 1 gezeigten Symmetrielinie oder -ebene S erstreckt. Gleiches trifft auf die Beschlaghälfte 42 und die Profilschiene 2B bzw. die dortigen Anlagelinien oder -flächen 48 und 6 zu, so daß sich sowohl in der 0°-Endlage gemäß Fig. 9 als auch der 180°-Endlage gemäß Fig. 8 definierte Winkelstellungen der Profilschienen 2A und 2B ergeben, nämlich einmal die in Fig. 9 gezeigte 0°-Stellung (die beiden Profilschienen 2A und 2B stehen im rechten Winkel zueinander) und eine hierzu um 180° gedrehte Stellung, bei der die Profilschienen 2A und 2B wieder im rechten Winkel zueinander stehen, jedoch die kurze Trapez-Gegenseite 10 der Profilschiene 2B in Richtung der Rückwand 72 weisen und hierzu parallel verlaufen würde.

Fig. 9 zeigt weiterhin die Möglichkeit, eine Beschlaghälfte, beispielsweise eine Beschlaghälfte 40 an der Profilschiene 2B im Bereich der dortigen Einschraubnut 14 festzulegen. Die Beschlaghälfte 40 ist hierbei frei, d.h., ohne zweite Beschlaghälfte 42, so daß der Verbindungsabschnitt 46 mit der Bohrung 60 frei vorliegt und sich hierbei im wesentlichen parallel zu der Seitenwand 74 erstreckt. Die Befestigung der Beschlaghälfte 40 erfolgt wieder über eine Verschraubung, welche das Lochblech 30 durchtritt und in der Einschraubnut 14 verankert ist. Auf das freie Ende der Beschlaghälfte 40, d.h., auf den Verbindungsabschnitt 46, kann dann ein Fachträger, eine Traverse etc. aufgesteckt werden, wie nachträglich noch erläutert wird. Dieser Fachträger oder diese Traverse erstreckt sich dann im wesentlichen parallel zu der Seitenwand 74 und dient zur Aufnahme von Regalfächern, zum Einbau von beispielsweise Auszügen oder Hängeregistraturen etc.. Fig. 9 zeigt in strichpunktierten Linien einen auf den Verbindungsabschnitt 46 der Beschlaghälfte 40 aufgesteckten Fachträger 76.

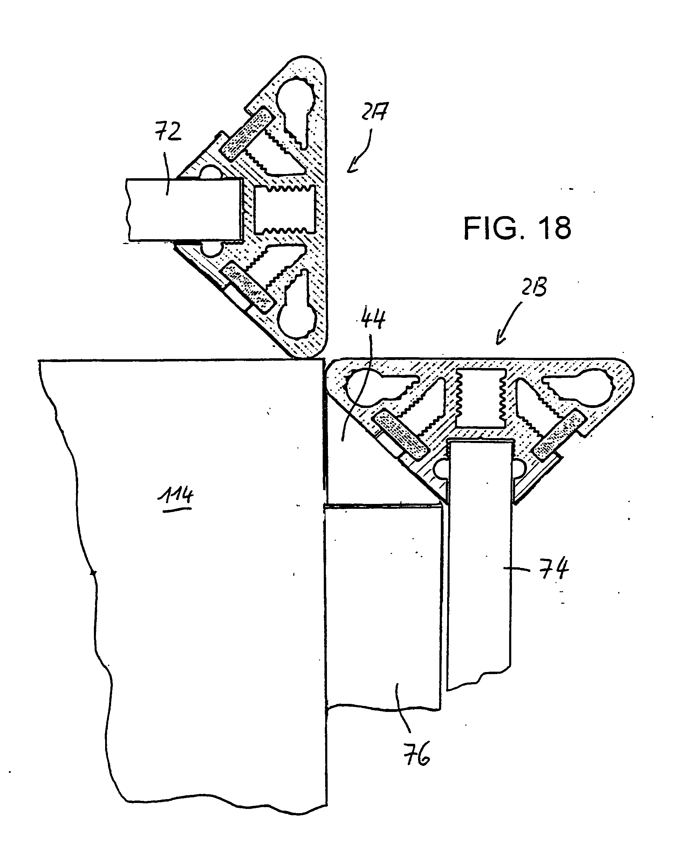

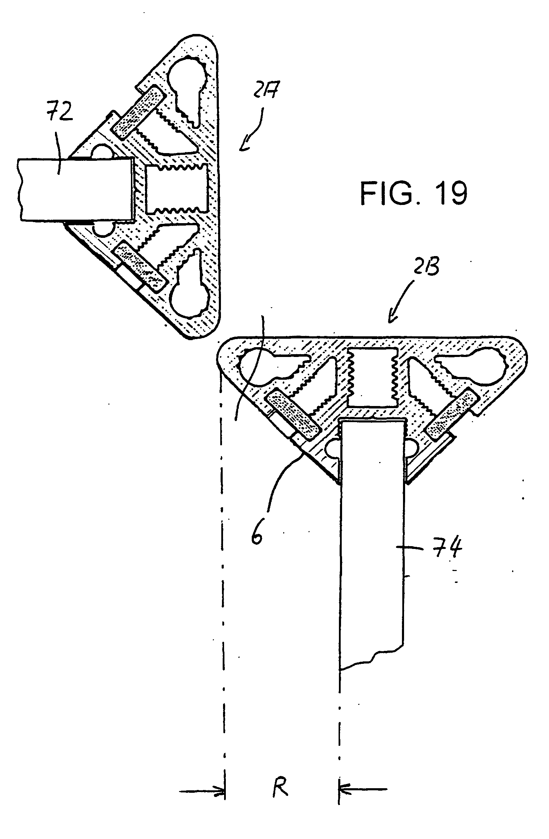

Fig. 19 zeigt eine Fig. 9 oder auch Fig. 18 entsprechende Darstellung auf die hintere rechte Ecke oder Kante des Aufbewahrungsmöbels mit den beiden Profilschienen 2A und 2B, der in die Profilschiene 2A eingesteckten Rückwand 72 und der in die Profilschiene 2B eingestecken Seitenwand 74. Mit der strichpunktierten Linie und dem Symbol R ist in Fig. 19 darüberhinaus dargestellt, daß durch die Trapezform der Profilschienen zwischen der Seitenwand 74 und der durch den langen Trapezschenkel der Profilschiene 2A definierten Ebene ein Einbauraum vorhanden ist, der neben der Möglichkeit, etwa gemäß Fig. 18 einen Fachträger 76 unter zur Hilfenahme einer Beschlaghälfte festzulegen, auch andere Einbausysteme anzuordnen, welche aufgrund der durch den Trapezschenkel 6 der Profilschiene 2B und dem entsprechenden Trapezschenkel einer in Fig. 19 der Profilschiene 2B gegenüberliegenden Profilschiene an der rechten Vorderkante des Aufbewahrungsmöbels gebildeten Hinterschneidung nicht in den eigentlichen Aufbewahrungsraum eintreten, der in Fig. 19 links von der linken strichpunktierten Linie liegt (bis zu der sich in Fig. 18 der Fachboden 114 erstreckt).

Mit anderen Worten, in dem Frei- oder Hinterschneidungsraum R gemäß Fig. 19 eingebaute zusätzliche Ausstattungselemente des Aufbewahrungsmöbels tragen nicht dazu bei, den links von der in Fig. 19 links verlaufenden gestrichelten Linie liegenden Aufbewahrungs- oder Stauraum einzuschränken. Besagter Aufbewahrungs- oder Stauraum steht somit uneingeschränkt zur Verfügung und wird nicht durch sich in seinem Volumen erstreckende zusätzliche Einbauvorrichtungen, Beschläge etc. beeinträchtigt oder beschränkt.

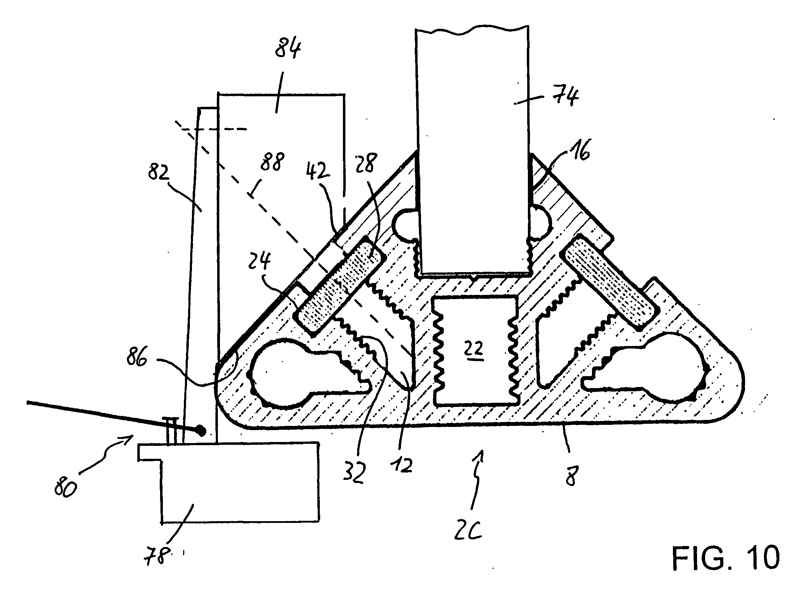

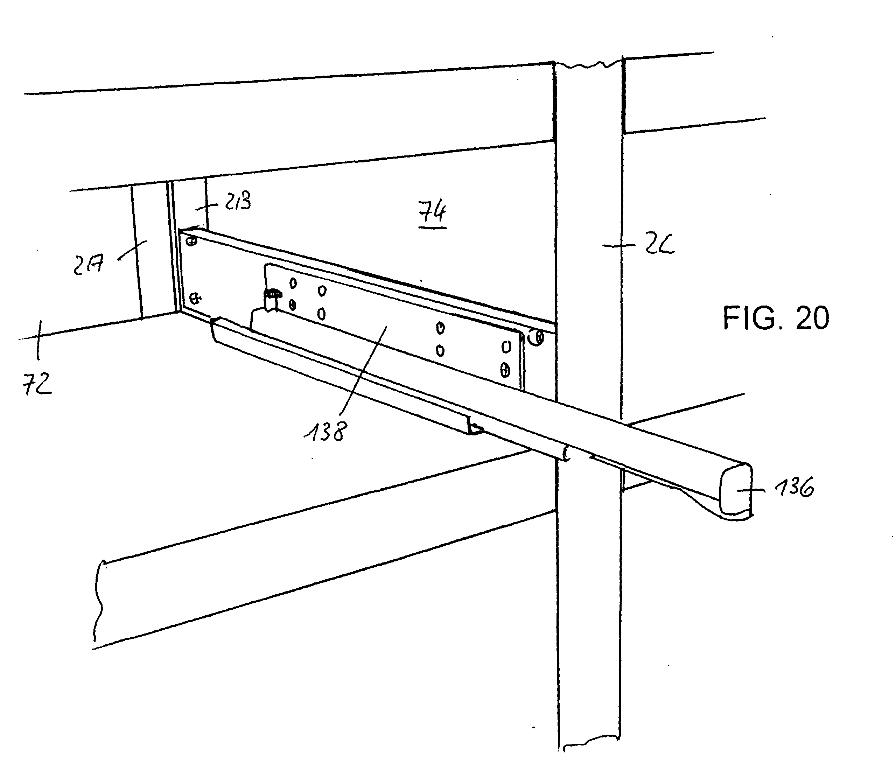

Fig. 20 zeigt eine perspektivische Darstellung der Einbaumöglichkeit eines Teleskopauszugs beispielsweise für Hängeregistraturen, Schubladen oder dergleichen. Der Teleskopauszug weist in bekannter Weise einen ein- oder mehrfach teleskopierenden Arm 136 auf, der über geeignete Befestigungsmittel an einer Grundplatte 138 in einer gegenüber dieser Grundplatte 138 verschiebbaren Art und Weise, beispielsweise Kugellager-gelagert ist. Die Grundplatte 138 erstreckt sich zwischen zwei Profilschienen, nämlich der in bespielsweise Fig. 19 gezeigten Profilschiene 2B und einer vorderen Profilschiene 2C (Fig. 10), welche ebenfalls eine Einstecknut 16 hat, welche zusammen mit der Profilschiene 2B die Seitenwand 74 trägt. Die Grundplatte 138 zusammen mit dem Arm 136 befindet sich hierbei in dem Frei- oder Hinterschneidungsraum R gemäß Fig. 19. An den beiden Endabschnitten ist die Grundplatte 138 der Abschrägung der Profilschienen 2B und 2C folgend abgeschrägt, um bündig in den Raum R eingebaut werden zu können. Die Befestigung der Grundplatte 138 erfolgt über mehrere Verschraubungen an den Profilschienen 2B und 2C.

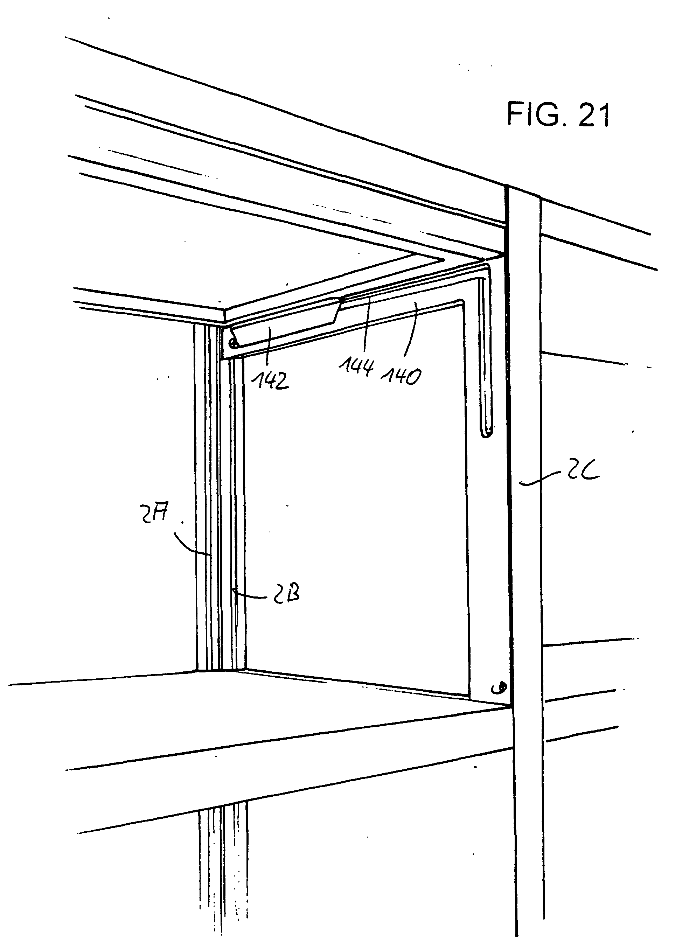

Fig. 21 zeigt die Möglichkeit, in dem Raum R eine Führungsschiene 140 für ein Ausklappbord anzuordnen. Die Führungsschiene 150 hat im wesentlichen L-Form und dient zur Aufnahme und Führung eines Schlittens 142 mittels einer Nut 144. Am Schlitten 142 ist der Anlenkarm für das Ausklappbord geführt. Die beiden Schenkel der L-Form der Führungsschiene 140 weisen wiederum an die 45°-Fläche der Profilschienen 2B und 2C angepaßte Abschrägungen oder Fasen auf, um zwischen den beiden Profilschienen 2B und 2C paßgenau in dem Raum R aufgenommen zu werden.

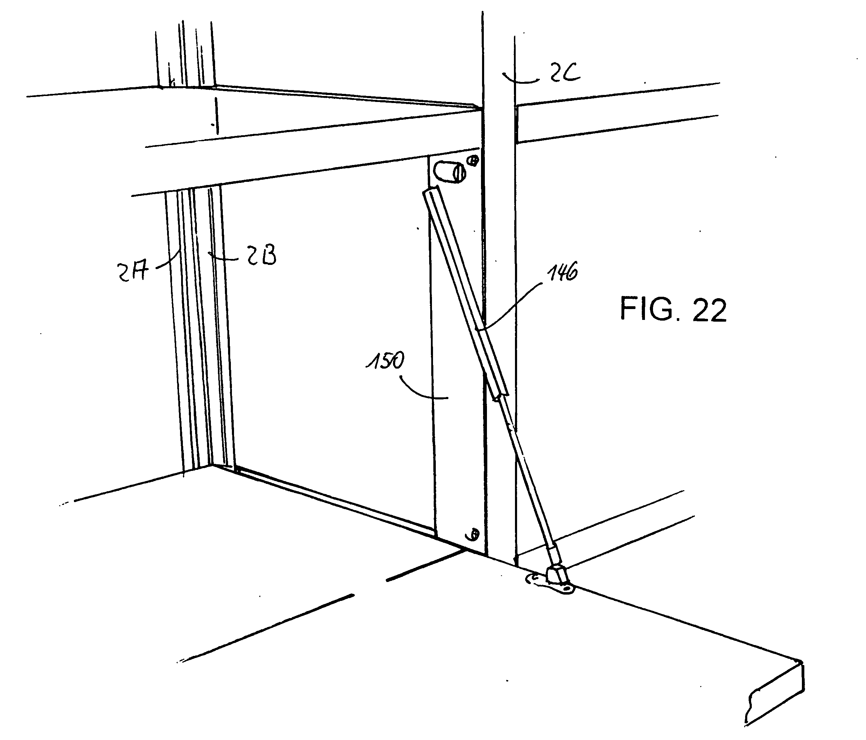

Fig. 22 zeigt die Befestigung einer Teleskopstange 146 für ein Ausklappbord 148, wobei die Teleskopstange 146 wiederum an einer Halteplatte 150 festgelegt ist, welche sich bündig an das Profil der Profilschiene 2C anlegt und mit dieser verschraubt ist. Auch diese Halteplatte 150 befindet sich mit ihrer Dicke oder Materialstärke vollständig innerhalb des Raums R gemäß Fig. 19, trägt also nicht in das Innere des Aufbewahrungsmöbels auf.

Fig. 10 zeigt in einer Draufsicht analog zu Fig. 9 das rechte vordere Ende oder die rechte vordere Kante eines mit dem erfindungsgemäßen Möbelsystem aufgebauten Aufbewahrungsmöbels (es sei an dieser Stelle nochmals angemerkt, daß die Maßstäbe der einzelnen Figuren zueinander nicht einheitlich sind).

In Fig. 10 erkennt man die der Profilschiene 2 von Fig. 1 entsprechende weitere Profilschiene 2C aus den Figuren 20 bis 22, welche in ihrer Einstecknut 16 die von der Profilschiene 2B gemäß Fig. 9 her kommende Seitenwand 74 (rechte Seitenwand des Aufbewahrungsmöbels) aufnimmt. Fig. 10 zeigt weiterhin die Möglichkeit, am in Fig. 10 linken Bereich der Profilschiene 2C, d.h. an demjenigen Bereich, der dem Inneren des Aufbewahrungsmöbels zugewandt ist, weitere Beschläge mit Hilfe der dortigen Lochschiene 28 und Einschraubnut 12 mit der als Gegenhaltemittel dienenden Riffelung 32 festzulegen. Im in Fig. 10 dargestellten Ausführungsbeispiel sei dieser weitere Beschlag ein in üblicher Weise ausgebildetes Topfscharnier 78, mit welchem sich eine Tür an der Profilschiene 2C anschlagen läßt. Das Topfscharnier 78 weist in bekannter Weise einen nicht näher zu erläuternden Scharniermechanismus 80 auf, der über einen Ausleger 82 mit einem Adapter 84 in Verbindung steht. Der Adapter 84 weist eine Anlagefläche 86 auf, welche der durch den Schenkel 48 definierten Anlagefläche des Befestigungsabschnittes 44 gleichzusetzen ist, das heißt, bei seiner Anlage an dem Trapezschenkel 4 der Profilschiene 2C ergibt sich ein Winkelausgleich derart, daß die mit dem Topfscharnier 78 angeschlagene Tür parallel zu der langen Trapez-Gegenseite 8 verläuft. Die Befestigung des Adapters 84 erfolgt über eine Verschraubung 88, welche den Adapter 84 nach Art der Kammer 62 und des Kanals 64 durchtritt (wobei der Schraubenkopf in einer Kammer analog zur Kammer 62 aufgenommen ist und der Gewindeabschnitt der Schraube in einem Kanal analog zum Kanal 64 verläuft). Der vom Adapter 84 bzw. dem dortigen Schraubkanal austretende Gewindeabschnitt der Schraube durchsetzt das Lochblech 28 und steht mit der Riffelung 32 der Einschraubnut 12 in Verbindung. Bevorzugt werden an dem Adapter 84 bzw. dessen Fläche 86 noch Vorsprünge analog den Vorsprüngen 66 und 68 von Fig. 6 ausgebildet.

Weiterhin ist im Bereich der Einschraubnut 12 seitens der Profilschiene 2C eine Beschlaghälfte in der aus Fig. 9 ersichtlichen Weise befestigbar derart, daß eine zwischen den beiden Beschlaghälften (Beschlaghälfte seitens der Profilschiene 2B und Beschlaghälfte seitens der Profilschiene 2C) verlaufender Fachträger (Fachträger 76 in Fig. 9) horizontal liegt. Mit anderen Worten, zur Befestigung der Beschlaghälfte 40 seitens der Profilschiene 2B und zur Befestigung einer (in Fig. 10 nicht gezeigten) Beschlaghälfte seitens der Profilschiene 2C wird dasselbe Loch oder dieselbe Durchbrechung in den jeweiligen Lochschienen 30 bzw. 28 gewählt, so daß die Beschlaghälften in gleicher Höhe liegen und damit die dazwischen verlaufende Traverse oder der dazwischen verlaufende Fachträger 76 horizontal liegt.

Durch die Anbringung einer Mehrzahl von Beschlaghälften seitens der Profilschiene 2B und seitens der Profilschiene 2C läßt sich somit eine Mehrzahl von Fachträgern oder Traversen zwischen den beiden Profilschienen 2B und 2C einbauen, wobei die Abstände der einzelnen Fachträger 76 zueinander weitestgehend beliebig im Rahmen der durch die Lochbleche vorgegebenen Rasterung wählbar ist.

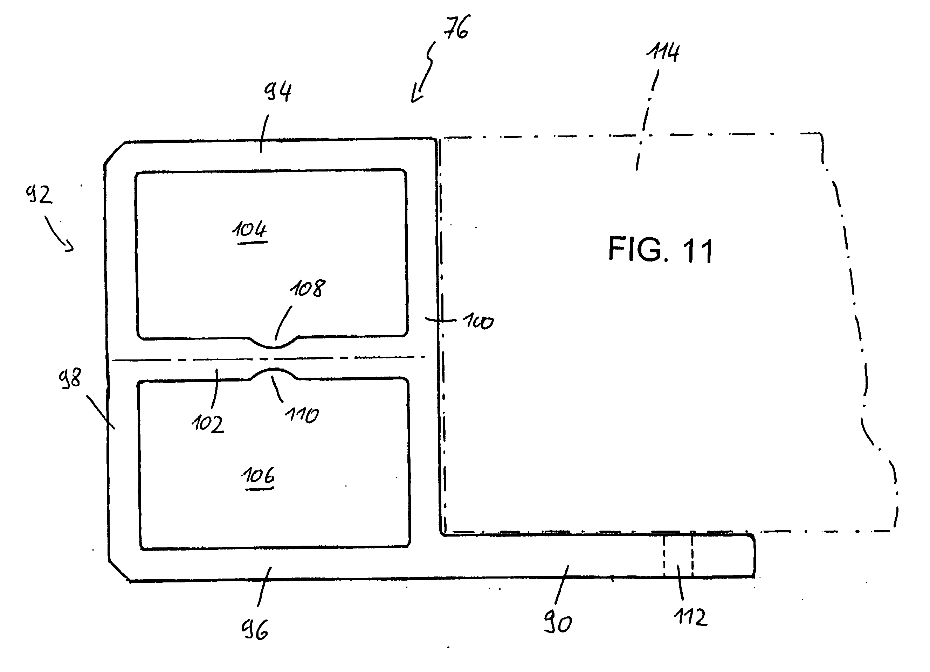

Fig. 11 zeigt einen stark vergrößerten Querschnitt durch einen Fachträger 76. Der Fachträger 76 kann in der Querschnittsdarstellung gemäß Fig. 11 als annähernd L-förmig mit einem horizontalen Schenkel 90 und einem vertikalen Schenkel 92 betrachtet werden. Der Fachträger 76 ist bevorzugt einstückig, beispielsweise aus Aluminium als Stranggußteil (wie die Profilschienen 2) ausgebildet. Der vertikale Schenkel 92 hat die aus Fig. 11 ersichtliche kastenförmig/hohle Formgebung mit einer Deckwand 94, einer Bodenwand 96 und zwei Seitenwänden 98 und 100, wobei die Bodenwand 96 in den horizontalen Schenkel 90 übergeht. Das Innere des durch die Wände 94 bis 100 definierten Hohlraums wird durch einen horizontalen Steg 102 in zwei gleich große Einsteckkammern 104 und 106 unterteilt. Jede der Einsteckkammern 104 und 106 ist in ihren Abmessungen so dimensioniert, daß der Verbindungsabschnitt 46 einer Beschlaghälfte 40 oder 42 hierin im Paßsitz aufgenommen werden kann. Zur Festlegung des Verbindungsabschnittes 46 an dem Fachträger 76 bzw. in der Einsteckkammer 104 oder 106 weist jede Beschlaghälfte (herausgegriffen sei wieder die Beschlaghälfte 40 von Fig. 3 bzw. 4) die Kammer 56 mit dem sich hieran anschließenden Kanal 58 auf, der gemäß Fig. 5 seitlich in der Bohrung 60 des Befestigungsabschnittes 44 mündet. Vor Anbringung der Beschlaghälften 40 an den Profilschienen 2B bzw. 2C werden endseitig in den Fachträger 76 die Verbindungsabschnitte 46 eingesteckt. Da aufgrund des abgeschrägten Verlaufs des Schenkels 48 bzw. der hierdurch definierten Anlagefläche des Befestigungsabschnittes 44 einer jeden Beschlaghälfte 40 die Beschlaghälfte 40 seitens der Profilschiene 2B gegenüber der Profilschiene 2C um 180° gespiegelt (gedreht) werden muß und da weiterhin gemäß etwa Fig. 5 der Verbindungsabschnitt 46 außermittig zum Befestigungsabschnitt 44 liegt, wird beispielsweise seitens der Profilschiene 2B der Verbindungsabschntt 46 in die obere Kammer 104 eingesteckt und seitens der Profilschiene 2C der Verbindungsabschnitt 46 der gegenüberliegenden Beschlaghälfte 40 in die untere Einsteckkammer 106. Aufgrund der vorgegebenen Rasterung durch die Löcher oder Durchbrechungen in den Lochblechen 28 und 30 wird erreicht, daß trotz dieser verdrehten Anordnung der Beschlaghälften an den Profilschienen 2B und 2C die Höhenlagen der einzelnen Beschlaghälften unverändert bleibt, so daß auch die dazwischen verlaufende Traverse oder der dazwischen verlaufende Fachträger 76 nicht aus seiner horizontalen Lage gebracht wird. Zur Befestigung der Beschlaghälften an dem Fachträger 76, nachdem diese in die Einsteckkammern 104 bzw. 106 eingeführt worden sind und hierin mit ihren Verbindungsabschnitten 46 zu liegen kommen, werden in die Kammern 56 bzw. die sich hieran anschließenden Kanäle 58 Schrauben eingeführt, wobei der Schraubenkopf in der Kammer 56 aufgenommen wird und der Gewindeabschnitt der Schraube durch den Kanal 58 in Richtung der Bohrung 60 verläuft. Beim Austritt des Schraubenendes aus dem Kanal 58 trifft dieses auf den Steg 102 zwischen den Seitenwänden 98 und 100 und wird dort aufgrund zweier Auskehlungen 108 und 110 leicht nach oben oder unten abgelenkt, so daß sich eine Verklemmung zwischen der Schraube und dem Steg 102 ergibt und hierdurch die Beschlaghälfte 40 gegenüber dem Fachträger 76 festgelegt ist. Im Anschluß daran wird der Fachträger 76 in der gewünschten Höhenlage zwischen die beiden Profilschienen 2B und 2C gesetzt und in der weiter oben geschilderten Weise mit diesen verschraubt. Der Schenkel 90 kommt hierbei gemäß Fig. 9 links von dem vertikalen Schenkel 92 zu liegen, d.h., er weist in Richtung des Innenraums des Aufbewahrungsmöbels und dient dazu, einen eingelegten Fachboden abzustützen. Hierzu kann der Schenkel 90 gemäß den Figuren 9 und 11 noch eine oder mehrere Bohrungen 112 aufweisen, in welche Halte- oder Zentrierstifte eingreifen, welche von der Unterseite des Fachbodens vorstehen. Die Dicke eines Fachbodens entspricht vorteilhafterweise einer Höhe zwischen der Oberseite des Schenkels 90 und der Ebene der Deckwand 94, so daß, wie in Fig. 11 strichpunktiert angedeutet, ein derartiger Fachboden 114 mit seiner Oberseite in einer Ebene mit der Ebene der Deckwand 94 liegt.

Fig. 18 zeigt eine verkleinerte Draufsicht von oben auf den durch die beiden Profilschienen 2A und 2B gebildeten hinteren rechten Eckbereich eines Aufbewahrungsmöbels mit der Rückwand 72, der Seitenwand 74, einem eingelegten Fachträger 76 und einem durch den Fachträger 76 gehaltenen Fachboden 114.

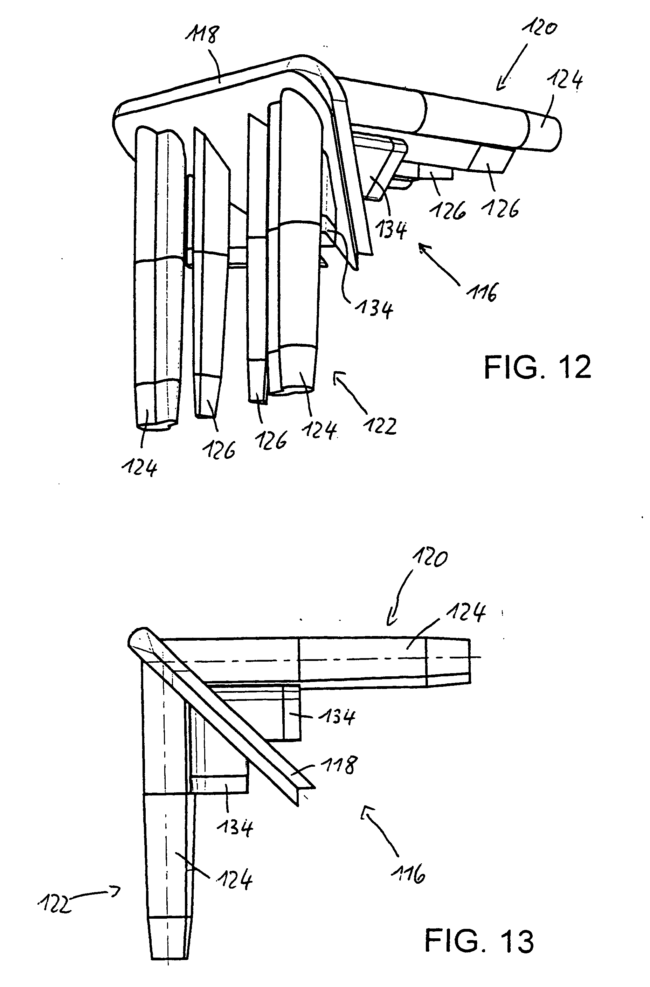

Die Figuren 12 und 13 zeigen in Verbindung mit Fig. 2 eine Möglichkeit, wie vertikal verlaufende Profilschienen endseitig mit solchen verbindbar sind, welche horizontal verlaufen. Gemäß den Figuren 12 und 13 sind hierzu Eckverbinder 116 vorgesehen, welche im wesentlichen aus einer Grundplatte 118 mit hiervon jeweils im Winkel von 45° vorstehenden Einsteckvorsprüngen 120 bzw. 122 aufgebaut sind. Im gewählten Ausführungsbeispiel erstrecken sich von jeder Seite der Grundplatte 118 insgesamt vier Einsteckvorsprünge, welche jeweils aus zwei identischen Paaren aufgebaut sind, nämlich einem weiter außen liegenden Paar 124 und einem weiter innen liegenden Paar 126. Gemäß Fig. 2 kommen hierbei die weiter außen liegenden Paare 124 in den Einstecköffnungen 18 bzw. 20 seitens der Profilschiene 2 zu liegen und die weiter innen liegenden Einsteckvorsprünge des Paares 126 kommen in den Endabschnitten der Einschraubnuten 12 und 14 zu liegen.

Weiterhin erstreckt sich parallel zu den jeweiligen Einsteckvorsprüngen 120 und 122 von jeder Seite der Grundplatte 118 aus ein Paar von weiteren Vorsprüngen 134, welche im eingesteckten Zustand des Eckverbinders 116 in den Profilschienen (wobei diese auf Gehrung geschnitten sind), an den Lochblechen 28 und 30 anschlagen und diese zum einen lagestabilisieren und zum anderen die Notwendigkeit beseitigen, diese Lochbleche zusammen mit den Profilschienen 2 ebenfalls exakt auf Gehrung zu schneiden. Zum Verbinden einer horizontalen Profilschiene mit einer vertikalen Profilschiene mittels des Eckverbinders 116 werden die aneinander grenzenden Endflächen der betreffenden Profilschienen auf Gehrung geschnitten, wonach dann die Einsteckvorsprünge 120 bzw. 122 in die entsprechenden Einstecköffnungen 18 und 20 bzw. die teilweise als Einstecköffnungen dienenden Einschraubnuten 12 und 14 eingeführt werden. Insbesondere die Einstecköffnungen 18 und 20 weisen an ihrem Innenprofil den Riffelungen 32 und 34 entsprechende Konturen auf, so daß die Einsteckvorsprünge 120 und 122, welche bevorzugt aus Kunststoffmaterial gefertigt sind, sich in den Einstecköffnungen 18 und 20 verkrallen und hierin kraftschlüssig und formschlüssig gehalten werden. An der Stoßfläche zwischen den beiden Endflächen der aneinander stoßenden Profilschienen 2 kommt die Grundplatte 118 des Eckverbinders 116 zu liegen.

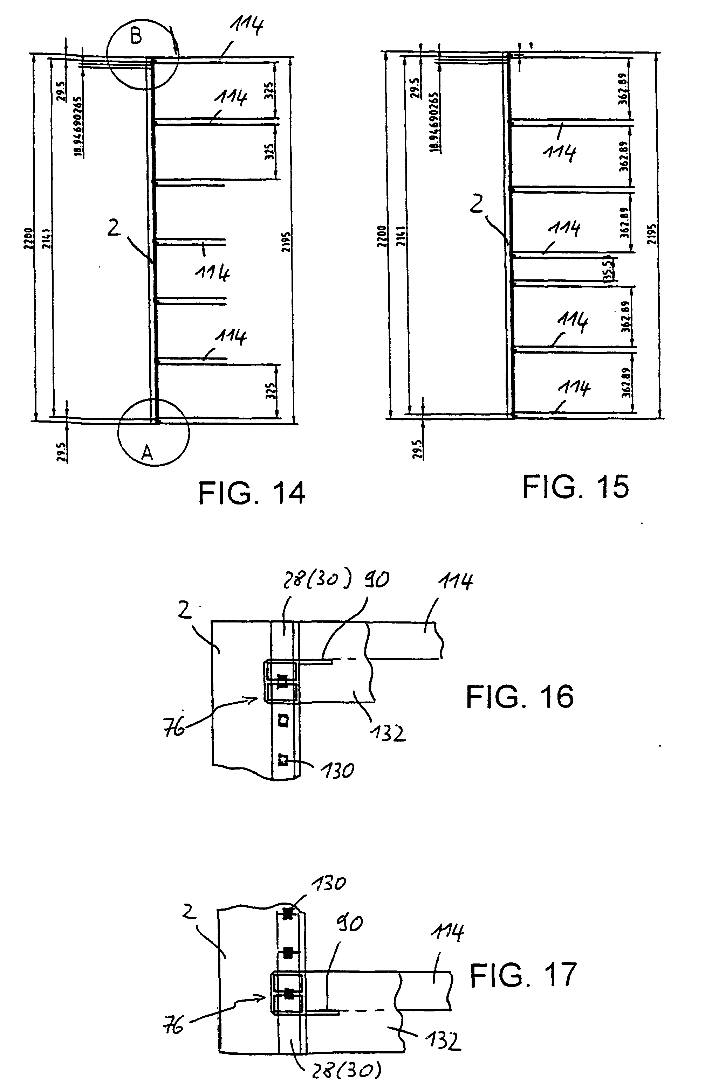

Die Figuren 14 und 15 zeigen stark verkleinert Teilabschnitte eines mit dem erfindungsgemäßen Möbelsystem unter Verwendung des erfindungsgemäßen Beschlages realisierten Aufbewahrungsmöbels, wobei zur Erläuterung die jeweiligen Bemaßungszahlen beibehalten wurden. Im Ausführungsbeispiel von Fig. 14, dem auch die vergrößerten Teilansichten gemäß der Figuren 16 und 17 entnommen sind, beträgt der lichte Abstand zwischen einzelnen Fachböden L14 jeweils 325 mm. Der Lochabstand oder die Rasterung der einzelnen Löcher 130 (Fig. 16 und 17) in den Lochschienen oder Lochblechen 28 bzw. 30, welche in den Profilschienen 2 gehalten sind, beträgt erfindungsgemäß bevorzugt exakt 18,9469 mm. Hierdurch kann trotz der Notwendigkeit, die Beschlaghälften 40 bei der Montage jeweils um 180° verdreht einzubauen, ein konstanter Abstand zwischen den Fachböden 114 von 325 mm beibehalten werden. es versteht sich, daß die Rasterung von exakt 18,9469 mm exemplarisch für das dargestellte Ausführungsbeispiel ist; andere Rasterungen sind gleichermaßen denkbar, bedingen jedoch z.B. andere konkrete Abmessungen z.B. des Fachträgers 76.

Fig. 15 zeigt eine andere Inneneinteilung eines Aufbewahrungsmöbels, bei dem andere Abstände zwischen den einzelnen Fachböden 114 gewählt sind, nämlich insgesamt 5 mal ein Abstand von 362,89 mm und 1 mal ein Abstand von 135,53 mm. Auch diese Abstände sind aufgrund der gewählten Rasterung der Lochbleche 28 bzw. 30 trotz des versetzten Einbaus der Beschlaghälften konstant.

Fig. 16 zeigt eine ausschnittsweise Vergrößerung im Bereich des Kreises B in Fig. 14 und veranschaulicht den Einbau des Fachträgers 76 derart, daß der horizontale Schenkel 90 oben zu liegen kommt; auf diesen Schenkel 90 wird der Fachboden 114 aufgelegt, der an seiner Vorderseite noch einen Anleimer 132 trägt, der die gesamte Höhe von der Oberkante des Fachbodens 114 bis zur untersten Erstreckung des Fachträgers 76 überdeckt (der in Fig. 16 sichtbar dargestellte Fachträger 76 ist in der Praxis von dem Anleimer 132 abgedeckt und damit nicht sichtbar).

Fig. 17 zeigt eine vergrößerte Darstellung im Bereich des Kreises A aus Fig. 14 mit einem Fachträger 76 in einer Einbaulage entsprechend der Darstellung von Fig. 11 mit aufgelegtem Fachträger 114 und vorgesetztem Anleimer 132 (der in Fig. 17 ebenfalls sichtbar dargestellte Fachträger 76 ist in der Praxis von dem Anleimer 132 abgedeckt und damit nicht sichtbar).

Die Befestigung des Fachträgers 76 über die jeweilige Beschlaghälfte erfolgt gemäß den Figuren 16 und 17 stets so, daß der Steg 102 exakt in Höhe des Mittelpunktes eines Lochs oder einer Bohrung 130 seitens des Lochbleches 28 oder 30 liegt.

Die Löcher 130 in den Lochblechen 28 und 30 können an sich beliebige Formgebung haben, z.B. rund; besonders vorteilhaft sowohl von Ästhetischen als auch vom Funktionellen haben sich rechteckförmige, insbesondere quadratische Löcher erwiesen.

Die Beschlaghälften 40 und 42 der Beschläge 38 sind bevorzugt aus Kunststoff gefertigt; die Profilschienen 2 sind ebenso wie die Fachträger 76 bevorzugt Aluminium-Stranggußprofile; für die Rückwände 72 bzw. Seitenwände 74 kommen unterschiedlichste Materialien oder Materialpaarungen in Frage, beispielsweise Holzplatten, stoffbespannte Rahmen, durchsichtige oder transparente Stegplatten aus Kunststoff etc. Die Lochbleche 28 und 30 sind bevorzugt aus rostfreiem, exakt bearbeitbarem Stahl.

Man erkennt aus der Draufsicht von Fig. 9, daß mit dem erfindungsgemäßen Möbelsystem eine beliebige Aneinanderreihung einzelner Aufbewahrungsmöbel möglich ist, um eine geschlossene Möbelfront oder Möbelwand zu bilden. Zur Anreihung beispielsweise nach rechts in Fig. 9 wäre ein Beschlag entsprechend dem Beschlag 38 mit einer Beschlaghälfte im Bereich der Einschraubnut 12 der Profilschiene 2B zu befestigen und an der anderen Beschlaghälfte wäre dann eine Profilschiene analog zu der Profilschiene 2A zu befestigen, wobei dann diese beiden Profilschienen mit ihren im wesentlichen geschlossenen langen Trapez-Gegenseiten 8 aufeinander zu weisen würden. Durch Verwendung unterschiedlich hoher Profilschienen für die vertikalen Profilschienen können auch unterschiedlich hohe Aufbewahrungsmöbel realisiert werden.

Das erfindungsgemäße Möbelsystem kommt mit einer minimalen Anzahl unterschiedlicher Teile aus, ermöglicht dennoch eine maximale Flexibilität. Raumecken, welche von der 90°-Form abweichen, lassen sich aufgrund der Schwenkverbindung in den Beschlägen 38 problemlos in einem Winkelbereich von z.B. 0° bis 180° ausgleichen, wobei lediglich ein entsprechender Zuschnitt der im dortigen Winkelbereich verwendeten Fachböden notwendig ist. Die Aufbewahrungsmöbel können werksseitig vormontiert geliefert werden, wobei gemäß Fig. 9 die eckseitigen Profilschienen 2A und 2B bereits untereinander verbunden sind und ggf. bereits die Rückwand 72 eingesteckt ist. Die beiden später die Seitenwände 74 aufnehmenden links und rechts liegenden Profilschienen 2 (entsprechend der Profilschiene 2B in Fig. 9) sind aus der Darstellung von Fig. 9 um 180° verschwenkt, wie bereits weiter oben erläutert, und somit platzsparend angeordnet. Zum Aufstellen eines derart vormontierten Aufbewahrungsmöbels werden lediglich die beiden später die Seitenwände haltenden Profilschienen ausgeklappt und die Seitenwände 74 in die jeweiligen Einstecknuten 16 eingesteckt, wonach der so errichtete Möbeltorso oder das Möbelfragment bereits eigenstabil und freistehend ist. Dies erleichtert die Montage und das Aufstellen sehr, da sie von einer Person alleine durchgeführt werden kann. Es ist auch möglich, die seitlich auszuklappenden Profilschienen mit bereits eingesetzten Seitenwänden 74 in der Darstellung von Fig. 9 nur um 90° zu verschwenken, so daß die Seitenwände 74 parallel zur Rückwand 72 verlaufen; auch so ist ein platzsparender Transport eines derart vorgefertigten Aufbewahrungsmöbels möglich.

Beschrieben wurde ein Aufbewahrungsmöbel, insbesondere für Büroeinrichtungen, mit wenigstens zwei Seitenwänden, einer Rückwand, einer Boden- und einer Deckplatte, welche über Beschläge miteinander verbunden sind,, welches, dadurch gekennzeichnet ist, daß zumindest die Seitenwände mit der Rückwand durch die Beschläge schwenkbeweglich verbunden sind. Ein hierzu gehöriger Beschlag zur Verbindung von Teilelementen des Aufbewahrungsmöbels ist dadurch gekennzeichnet, daß der Beschlag ein Schwenkbeschlag ist, der die jeweiligen Seitenwände mit der Rückwand schwenkbeweglich verbindet. Gegenstand der Erfindung ist weiterhin ein Möbelsystem zum Errichten eines Aufbewahrungsmöbels, insbesondere eines erfindungsgemäßen Aufbewahrungsmöbels unter Verwendung wenigstens eines erfindungsgemäßen Beschlags, welches gekennzeichnet ist durch Profilschienen zumindest an den Stoßkanten zwischen Rückwand und den Seitenwänden, wobei an den Profilschienen der wenigstens eine Beschlag befestigbar ist.

## Patentansprüche

1. Aufbewahrungsmöbel, insbesondere für Büroeinrichtungen, mit wenigstens zwei Seitenwänden (74) und einer, bevorzugt massiven, Rückwand (72), vorzugsweise einer Boden- und einer Deckplatte, wobei zumindest die Seitenwände (74) und die Rückwand (72) über wenigstens einen Beschlag (38) miteinander verbunden sind, welcher zwischen den Seitenwänden (74) und der Rückwand (72) eine Schwenkbewegung zuläßt,
**dadurch gekennzeichnet, daß**
zwei Profilschienen (2, 2A, 2B, 2C) jeweils in einem Eckbereich zwischen Rückwand (72) und den Seitenwänden (74) an den Stoßkanten von Rückwand (72) und den Seitenwänden (74) angeordnet sind, wobei eine Profilschiene an der Rückwand (72) und die andere Profilschiene an der entsprechenden Seitenwand (74) festgelegt ist und die beiden Profilschienen (2, 2A, 2B, 2C) mittels des Beschlags (38) verbunden sind.

2. Möbel nach Anspruch 1, **dadurch gekennzeichnet, daß** der Schwenkweg zwischen einer Seitenwand (74) und der angrenzenden Rückwand (72) zwischen wenigstens 90° und 180° liegt.

3. Möbel nach Anspruch 2, **dadurch gekennzeichnet, daß** der Schwenkbereich zwischen einer Seitenwand (74) und der angrenzenden Rückwand (72) exakt 90° beträgt.

4. Möbel nach Anspruch 2, **dadurch gekennzeichnet, daß** der Schwenkbereich zwischen einer Seitenwand (74) und der angrenzenden Rückwand (72) exakt 180° beträgt.

5. Möbel nach einem der Ansprüche 1 bis 4, **dadurch gekennzeichnet, daß** die Schwenk-Endlagen zwischen Seitenwand (74) und Rückwand (72) durch Anschläge festgelegt sind.

6. Möbel nach einem der Ansprüche 1 bis 5, **dadurch gekennzeichnet, daß** der Beschlag (38) aus zwei zueinander identischen Beschlaghälften (40, 42) aufgebaut ist, welche schwenkbeweglich miteinander verbunden sind.

7. Möbel nach einem der Ansprüche 1 bis 6, **dadurch gekennzeichnet, daß** der Beschlag (38) an der Profilschiene (2, 2A, 2B, 2C) festschraubbar ist.

8. Möbel nach Anspruch 7, **dadurch gekennzeichnet, daß** der Beschlag (38) in einem bestimmten Rastermaß an der Profilschiene (2, 2A, 2B, 2C) festschraubbar ist.

9. Möbel nach Anspruch 8, **dadurch gekennzeichnet, daß** das Rastermaß durch eine sich im wesentlichen über die gesamte Länge der Profilschiene (2, 2A, 2B, 2C) erstreckende Lochung (130) vorgegeben ist.

10. Möbel nach Anspruch 9, **dadurch gekennzeichnet, daß** die Lochung (130) in einem streifenförmigen Lochblech (28, 30) ausgebildet ist, welches in eine entsprechende Aufnahmenut (24, 26) seitens der Profilschiene (2, 2A, 2B, 2C) eingeschoben ist.

11. Möbel nach Anspruch 10, **dadurch gekennzeichnet, daß** das Lochblech (28, 30) eine im Querschnitt der Profilschiene (2, 2A, 2B, 2C) im wesentlichen senkrecht zur Aufahmenut (24, 26) stehende Einschraubnut (12, 14) in der Profilschiene abdeckt, wobei die Einschraubnut (12, 14) zumindest über einen Teil ihrer Tiefe Gegenhaltemittel (32, 34) für einen Eingriff mit einem Gewinde einer Schraube aufweist, mit welcher der Beschlag (38) an der Profilschiene (2, 2A, 2B, 2C) anschraubbar ist, wobei weiterhin die einzelnen Löcher (130) der Lochblech-Lochung von dem Gewinde ohne Schraubeingriff hiermit durchsetzt werden.

12. Möbel nach einem der Ansprüche 9 bis 11, **dadurch gekennzeichnet, daß** die Löcher (130) der Lochblech-Lochung viereckig, insbesondere quadratisch sind.

13. Möbel nach einem der Ansprüche 9 bis 12, **dadurch gekennzeichnet, daß** das Rastermaß bzw. der Mittelpunktsabstand der einzelnen Löcher (130) der Lochblech-Lochung 18,9469 mm beträgt.

14. Möbel nach einem der Ansprüche 1 bis 13, **dadurch gekennzeichnet, daß** die Profilschiene (2, 2A, 2B, 2C) im Querschnitt im wesentlichen die Form eines gleichschenkeligen Trapezes hat, wobei weiterhin im Querschnitt gesehen:
im Bereich der beiden Trapezschenkel (4, 6) jeweils eine der Aufnahmenuten (24, 26) für das Lochblech (28, 30) im wesentlichen parallel zu dem jeweiligen Trapezschenkel (4, 6) verlaufend ausgebildet ist;
im Bereich der beiden Trapezschenkel (4, 6) jeweils eine der Einschraubnuten (12, 14) senkrecht zum jeweiligen Trapezschenkel (4, 6) verlaufend ausgebildet ist;
die längere (8) der beiden parallel zueinander verlaufenden Trapez-Gegenseiten (8, 10) im wesentlichen geschlossen ist; und
in der kürzeren (10) der beiden parallel zueinander verlaufenden Trapez-Gegenseiten (8, 10) eine senkrecht zu dieser Gegenseite verlaufende Einstecknut (16) ausgebildet ist.

15. Möbel nach Anspruch 14, **dadurch gekennzeichnet, daß** in die Einstecknut (16) ein plattenförmiges Bauelement, insbesondere die Rück- und/oder Seitenwand (72, 74) des Möbels einsteckbar ist.

16. Möbel nach einem der Ansprüche 1 bis 15, **dadurch gekennzeichnet, daß** die Profilschiene (2, 2A, 2B, 2C) wenigstens eine im Querschnitt umfangsseitig geschlossene Einstecköffnung (18, 20) aufweist, welche mit wenigstens einem entsprechenden Einsteckvorsprung (120, 122) seitens eines Eckverbinders (116) in Eingriff bringbar ist.

17. Möbel nach Anspruch 16, **dadurch gekennzeichnet, daß** der Eckverbinder (116) aus einer Grundplatte (118) mit den hiervon beidseits jeweils im Winkel von bevorzugt 45° vorspringenden Einsteckvorsprüngen (120, 122) besteht.

18. Möbel nach Anspruch 16 oder 17, **gekennzeichnet durch**
eine Mehrzahl von Einstecköffnungen (18, 20), welche symmetrisch zur Mittelsenkrechten (S) des Trapezquerschnitts der Profilschiene (2, 2A, 2B, 2C) in diesem Querschnitt verteilt sind; und
eine entsprechende Anzahl von Einsteckvorsprüngen (120, 122) seitens des Eckverbinders (116), welche entsprechend der Verteilung der Einstecköffnungen (18, 20) auf der Grundplatte (118) verteilt sind.

19. Möbel nach einem der Ansprüche 6 bis 18, **gekennzeichnet durch** in Tiefenrichtung des Möbels verlaufende Traversen und/oder Fachbodenträger (76), die jeweils mittels voneinander getrennter Beschlaghälften (40, 42), welche als Befestigungsmittel dienen, an der Profilschiene (2, 2A, 2B, 2C) angebracht sind.

20. Möbel nach Anspruch 19, **dadurch gekennzeichnet, daß** die Traversen und/oder Fachbodenträger (76) endseitig auf je eine Beschlaghälfte (40, 42) aufsteckbar sind.

21. Möbel nach Anspruch 20, **dadurch gekennzeichnet, daß** die Steckverbindung zwischen Traverse und/oder Fachbodenträger (76) mit der Beschlaghälfte (40, 42) durch eine die Beschlaghälfte durchsetzende Verschraubung sicherbar ist.

22. Möbel nach Anspruch 20 oder 21, **dadurch gekennzeichnet, daß** die Traverse und/oder der Fachbodenträger (76) im Querschnitt L-förmig ausgebildet ist, wobei der horizontale Schenkel (90) des "L" zur Halterung eines Deckel- oder Bodenteils oder eines Fachbodens (76) dient und wobei der vertikale Schenkel (92) des "L" kastenförmig/hohl ausgebildet ist und auf ein freies Ende (46) der Beschlaghälfte (40, 42) aufsteckbar ist.

23. Möbel nach Anspruch 22, **dadurch gekennzeichnet, daß** der kastenförmige/hohle vertikale Schenkel (92) des "L" durch einen horizontalen Steg (102) in zwei gleich große Einsteckkammern (104, 106) unterteilt ist, wobei jede Einsteckkammer formschlüssig auf das freie Ende (46) der Beschlaghälfte (40, 42) steckbar ist.

24. Möbel nach Anspruch 22 oder 23, **dadurch gekennzeichnet, daß** die Traverse und/oder der Fachbodenträger (76) wendbar derart ist, daß der horizontale Schenkel (90) des "L" wahlweise am oberen oder unteren Ende des vertikalen Schenkels (92) zu liegen kommt.

25. Möbel nach Anspruch 24, **dadurch gekennzeichnet, daß** auch bei gewendeter Traverse und/oder gewendetem Fachbodenträger (76) der lichte Abstand zwischen hiervon getragenen Deckel- oder Bodenteilen oder Fachböden (114) unverändert bleibt.

## Claims

1. A piece of storage furniture, in particular for office furniture, comprising at least two side walls (74) and a preferably solid rear wall (72), in a preferred manner a bottom panel and a top panel, wherein at least the side walls (74) and the rear wall (72) are connected to each other through at least one fitting (38) permitting a pivotal movement between the side walls (74) and the rear wall (72),
**characterized in that**
two profile rails (2, 2A, 2B, 2C) are respectively arranged in a corner range between the rear wall (72) and the side walls (74) at the bordering edges of rear wall (72) and side walls (74), wherein one profile rail is fixed at the rear wall (72) and the other profile rail at the corresponding side wall (74), and the two profile rails (2, 2A, 2B, 2C) are connected through the fitting (38).

2. The piece of furniture in accordance with Claim 1, **characterized in that** the pivoting distance between a side wall (74) and the adjacent rear wall (72) is between at least 90° and 180°.

3. The piece of furniture in accordance with Claim 2, **characterized in that** the pivotal range between a side wall (74) and the adjacent rear wall (72) is exactly 90°.

4. The piece of furniture in accordance with Claim 2, **characterized in that** the pivotal range between a side wall (74) and the adjacent rear wall (72) is exactly 180°.

5. The piece of furniture in accordance with any one of Claims 1 to 4, **characterized in that** the pivotal end positions between side wall (74) and rear wall (72) are determined by stops.

6. The piece of furniture in accordance with any one of Claims 1 to 5, **characterized in that** the fitting (38) is constructed of two identical fitting halves (40, 42) pivotally connected with each other.

7. The piece of furniture in accordance with any one of Claims 1 to 6, **characterized in that** the fitting (38) may be attached to the profile rail (2, 2A, 2B, 2C) by screwed connection.

8. The piece of furniture in accordance with Claim 7, **characterized in that** the fitting (38) may be attached to the profile rail (2, 2A, 2B, 2C) at a particular modular dimension by screwed connection.

9. The piece of furniture in accordance with Claim 8, **characterized in that** the modular dimension is predetermined by a perforation (130) extending substantially through the entire length of the profile rail (2, 2A, 2B, 2C).

10. The piece of furniture in accordance with Claim 9, **characterized in that** the perforation (130) is formed in a strip-shaped perforated plate (28, 30) inserted into a corresponding reception groove (24, 26) on the side of the profile rail (2, 2A, 2B, 2C).

11. The piece of furniture in accordance with Claim 10, **characterized in that** the perforated plate (28, 30) covers a screw-in groove (12, 14) in the profile rail that is substantially perpendicular to the reception groove (24, 26) in the cross-section of the profile rail (2, 2A, 2B, 2C), wherein the screw-in groove (12, 14) has at least over part of its depth supporting means (32, 34) for engagement with a thread of a screw whereby the fitting (38) may be attached to the profile rail (2, 2A, 2B, 2C) by screwed connection, wherein furthermore the thread extends through the individual holes (130) of the perforated plate-perforation without being engaged by the screw.

12. The piece of furniture in accordance with any one of Claims 9 to 11, **characterized in that** the holes (130) of the perforation in the perforated plate are rectangular, in particular square.

13. The piece of furniture in accordance with any one of Claims 9 to 12, **characterized in that** the modular dimension, or the distances between the centers of the individual holes (130) of the perforation in the perforated plate, is 18.9469 mm.

14. The piece of furniture in accordance with any one of Claims 1 to 13, **characterized in that** the profile rail (2, 2A, 2B, 2C) in cross-section substantially has the shape of an isosceles trapezoid, wherein furthermore, when viewed in cross-section:
in the range of the two trapezoid legs (4, 6) a respective one of the reception grooves (24, 26) for the perforated plate (28, 30) is formed so as to extend substantially in parallel with the respective trapezoid leg (4, 6);
in the range of the two trapezoid legs (4, 6) a respective one of the screw-in grooves (12, 14) is formed so as to extend perpendicular to the respective trapezoid leg (4, 6);
the longer one (8) of the two opposed trapezoid sides (8, 10) extending in parallel to each other is substantially closed; and
in the shorter one (10) of the two opposed trapezoid sides (8, 10) extending in parallel to each other, an insertion groove (16) extending perpendicular to this opposed side is formed.

15. The piece of furniture in accordance with Claim 14, **characterized in that** a panel-shaped component, in particular the rear and/or side wall (72, 74) of the piece of furniture, is insertable in the insertion groove (16).

16. The piece of furniture in accordance with any one of Claims 1 to 15, **characterized in that** the profile rail (2, 2A, 2B, 2C) has at least one insertion opening (18, 20) peripherally closed in cross-sectional view and engageable with at least one corresponding insertion protrusion (120, 122) on the side of a corner connector (116).

17. The piece of furniture in accordance with Claim 16, **characterized in that** the corner connector (116) consists of a base panel (118) having the insertion protrusions (120, 122) projecting therefrom on either side at respective angles of preferably 45°.

18. The piece of furniture in accordance with Claim 16 or 17, **characterized by**
a plurality of insertion openings (18, 20) that are distributed symmetrically relative to the mean perpendicular (S) of the trapezoidal cross-section of the profile rail (2, 2A, 2B, 2C) in the cross-section thereof; and
a corresponding number of insertion protrusions (120, 122) on the side of the corner connector (116), which are distributed on the base panel (118) in accordance with the distribution of the insertion openings (18, 20).

19. The piece of furniture in accordance with any one of Claims 6 to 18, **characterized by** cross-members and/or shelf support members (76) extending in the depth direction of the piece of furniture and respectively attached to the profile rail (2, 2A, 2B, 2C) with the aid of separate fitting halves (40, 42) serving as fixation means.

20. The piece of furniture in accordance with Claim 19, **characterized in that** the cross-members and/or shelf support members (76) are adapted to be inserted on respective fitting halves (40, 42) at their end sides.

21. The piece of furniture in accordance with Claim 20, **characterized in that** the insertion connection between cross-member and/or shelf support member (76) is adapted to be secured with the fitting half (40, 42) by means of a screw connection extending through the fitting half.

22. The piece of furniture in accordance with Claim 20 or 21, **characterized in that** the cross-member and/or the shelf support member (76) has an L-shaped configuration in cross-sectional view, with the horizontal leg (90) of the "L" serving for mounting a cover or bottom part, and the vertical leg (92) of the "L" being box-shaped/hollow and adapted to be inserted on a free end (46) of the fitting half (40, 42).

23. The piece of furniture in accordance with Claim 22, **characterized in that** the box-shaped/hollow leg (92) of the "L" is subdivided into two insertion spaces (104, 106) of identical size by a horizontal web (102), with each of the insertion spaces being adapted for insertion on the free end (46) of the fitting half (40, 42) in positive engagement.

24. The piece of furniture in accordance with Claim 22 or 23, **characterized in that** the cross-member and/or the shelf support member (76) may be reversed such that the horizontal leg (90) of the "L" optionally comes to lie at the upper or lower end of the vertical leg (92) .

25. The piece of furniture in accordance with Claim 24, **characterized in that** even in the reversed condition of the cross-member and/or of the shelf support member (76), the clearance between cover or bottom parts or shelves (114) supported thereby remains unchanged.

## Revendications

1. Meuble de rangement, en particulier pour des installations de bureau, avec au moins deux parois latérales (74) et une paroi arrière (72), préférablement massive, de préférence une plaque de fond et de sommet, dans lequel au moins les parois latérales (74) et la paroi arrière (72) sont raccordées ensemble par au moins une armature (38) qui, entre les parois latérales (74) et la paroi arrière (72), permet un mouvement de basculement,
**caractérisé en ce que**
deux rails profilés (2, 2A, 2B, 2C) sont disposés respectivement dans une zone de coin entre la paroi arrière (72) et les parois latérales (74) sur les rebords de la paroi arrière (72) et les côtés latéraux (74), un rail profilé étant fixé sur la paroi arrière (72) et l'autre rail profilé étant fixé sur la paroi latérale correspondante (74), et les deux rails profilés (2, 2A, 2B, 2C) étant raccordés au moyen de l'armature (38).

2. Meuble selon la revendication 1, **caractérisé en ce que** le trajet de basculement entre une paroi latérale (74) et la paroi arrière limitrophe (72) se situe entre au moins 90° et 180°.

3. Meuble selon la revendication 2, **caractérisé en ce que** la zone de basculement entre une paroi latérale (74) et la paroi arrière limitrophe (72) est exactement de 90°.

4. Meuble selon la revendication 2, **caractérisé en ce que** la zone de basculement entre une paroi latérale (74) et la paroi arrière limitrophe (72) est exactement de 180°.

5. Meuble selon l'une des revendications 1 à 4, **caractérisé en ce que** les positions d'extrémité de basculement entre la paroi latérale (74) et la paroi arrière (72) sont fixées par des butées.

6. Meuble selon l'une des revendications 1 à 5, **caractérisé en ce que** l'armature (38) se compose de deux moitiés d'armature (40, 42) identiques l'un à l'autre et raccordées de manière à permettre un mouvement basculant.

7. Meuble selon l'une des revendications 1 à 6, **caractérisé en ce que** l'armature (38) peut être fixée par vissage sur le rail profilé (2, 2A, 2B, 2C).

8. Meuble selon la revendication 7, **caractérisé en ce que** l'armature (38) peut être fixée par vissage dans une dimension de trame déterminée sur le rail profilé (2, 2A, 2B, 2C).

9. Meuble selon la revendication 8, **caractérisé en ce que** la dimension de trame est prédéterminée par une perforation (130) s'étendant sensiblement sur toute la longueur du rail profilé (2, 2A, 2B, 2C).

10. Meuble selon la revendication 9, **caractérisé en ce que** la perforation (130) est formée dans une tôle perforée (28, 30) en forme de bande qui est insérée dans une gorge de réception correspondante (24, 26) latéralement du côté du rail profilé (2, 2A, 213, 2C).

11. Meuble selon la revendication 10, **caractérisé en ce que** la tôle perforée (28, 30) recouvre une gorge de vissage (12, 14) située dans la section transversale du rail profilé (2, 2A, 2B, 2C), de façon sensiblement perpendiculaire à la gorge de réception (24, 26) dans le rail profilé, dans lequel la gorge de vissage d'insertion (12, 14) présente, au moins sur une partie de sa profondeur, des moyens de contre-retenue (32, 34) pour un engrènement avec un filetage d'une vis, avec laquelle l'armature (38) peut être vissée sur le rail profilé (2, 2A, 2B, 2C), dans lequel de plus les différents trous (130) de la perforation de la tôle perforée sont traversés par le filetage sans vissage.

12. Meuble selon l'une des revendications 9 à 11, **caractérisé en ce que** les trous (130) de la perforation de la tôle perforée sont de forme rectangulaire, en particulier carrés.

13. Meuble selon l'une des revendications 9 à 12, **caractérisé en ce que** la dimension de trame, ou distance de point moyen, des différents trous (130) de la perforation de tôle perforée est de 18,9469 mm.

14. Meuble selon l'une des revendications 1 à 13, **caractérisé en ce que** le rail profilé (2, 2A, 2B, 2C) dans sa section transversale a la forme sensiblement d'un trapèze équilatéral, dans lequel de plus, en section transversale
au niveau des deux ailes du trapèze (4, (5), est formée respectivement l'une des gorges de réception (24, 26) pour la tôle perforée (28, 30) et formée essentiellement de façon continue parallèlement aux côtés respectifs du trapèze (4, 6) ;
au niveau des deux ailes du trapèze (4, 6), est formée respectivement de façon continue une des gorges de vissage d'insertion (12, 14) perpendiculairement à respectivement le côté du trapèze (4, 6) ;
le plus long (8) des côtés opposés parallèles (8, 10) du trapèze s'étend de façon sensiblement fermée ; et
dans le plus court (10) des deux côtés opposés parallèles (8, 10) du trapèze, est formée une gorge d'insertion (16) s'étendant perpendiculairement à ce côté.

15. Meuble selon la revendication 14, **caractérisé en ce que**, dans la gorge d'insertion (16), est particulièrement enfichable la paroi arrière et/ou latérale (72, 74) du meuble.

16. Meuble selon l'une des revendications 1 à 15, **caractérisé en ce que** le rail de profilé (2, 2A, 2B, 2C) présente au moins une ouverture d'insertion (18, 20) fermée sur le côté périphérique de réception transversale qui, avec au moins une saillie d'insertion correspondante (120, 122), peut être mise en engrènement avec une liaison de coin (116).

17. Meuble selon la revendication 16, **caractérisé en ce que** la liaison de coin (116) consiste en une plaque de base (118) avec les saillies d'insertion (120, 122) faisant saillie ici des deux côtés respectivement en angle de préférence de 45°.

18. Meuble selon la revendication 16 ou 17, **caractérisé en ce qu'**une pluralité d'ouvertures d'introduction (18, 20),w qui sont symétriques aux perpendiculaires médianes (S) des sections transversales de trapèze des rails profilés (2, 2A, 2B, 2C), sont réparties dans cette section transversale ; et
une quantité correspondante de saillies d'insertion (120, 122) du côté de la liaison de coin (116) sont réparties de façon correspondante à la répartition des ouvertures d'insertion (18, 20) sur la plaque de base (118).

19. Meuble selon l'une des revendications 6 à 18, **caractérisé par** des traverses et/ou supports plateau (76) respectivement attachés au rail profilé (2, 2A, 2B, 2C) au moyen de moitiés d'armature (40, 42) servant de moyens d'attache.

20. Meuble selon la revendication 19, **caractérisé en ce que** chaque traverse et/ou support plateau (76) est enfichable sur une moitié d'armature (40, 42) au côté d'extrémité.

21. Meuble selon la revendication 19, **caractérisé en ce que** le raccordement d'enfichage entre traverse et/ou support plateau (76) avec la moitié d'armature (40, 42) peut être arrêté par vissage au travers de la moitié d'armature.

22. Meuble selon la revendication 20 ou 21, **caractérisé en ce que** la traverse et/ou le support plateau (76) a une forme d'un "L" en section transversale, l'aile horizontale (90) de cet "L" servant de support pour un élément de recouvrement ou fond ou d'un plateau (76), et l'aile verticale (92) de cet "L" étant en forme de caisson/creux et enfichable sur une extrémité libre (46) de la moitié d'armature (40, 42).

23. Meuble selon la revendication 22, **caractérisé en ce que** l'aile en forme de caisson/creux (92) dudit "L" est divisé en deux chambres d'enfichage (104, 106) d'une même grandeur par une entretoise horizontale (102), chacune des chambres d'enfichage étant enfichable sur l'extrémité libre (46) de la moitié d'armature (40, 42) à engagement positif.

24. Meuble selon la revendication 22 ou 23, **caractérisé en ce que** la traverse et/ou le support plateau (76) est renversible de sorte que l'aile horizontale (90) dudit "L" se situe facultativement sur l'extrémité supérieure ou inférieure de l'aile verticale (92).

25. Meuble selon la revendication 24, **caractérisé en ce que**, même dans la condition renversée de la traverse et/ou du support plateau (76), l'écartement entre des éléments de recouvrement ou de fond ou plateaux (114) y supportés reste le même.
